# EUROPÄISCHE PATENTSCHRIFT

(11) **EP 3 542 069 B1**
(45) Veröffentlichungstag und Bekanntmachung des Hinweises auf die Patenterteilung: **01.03.2023**
(21) Anmeldenummer: 17832472.9
(22) Anmeldetag: 01.11.2017
(51) Int. Cl.: F04D 29/46, F04D 27/02, F04D 29/42, F02B 37/22, F02M 26/09, F02M 26/10, F02M 26/17, F02M 26/19, F02M 26/21, F02M 26/50

(54) **VERDICHTER, ABGASTURBOLADER UND BRENNKRAFTMASCHINE**
COMPRESSOR, TURBOCHARGER AND INTERNAL COMBUSTION ENGINE
COMPRESSEUR, TURBOCOMPRESSEUR ET MOTEUR A COMBUSTION INTERNE

(30) Priorität: 16.11.2016 DE 102016222585; 07.06.2017 DE 102017209598
(43) Veröffentlichungstag der Anmeldung: 25.09.2019
(73) Patentinhaber: Volkswagen Aktiengesellschaft, 38440 Wolfsburg (DE)
(72) Erfinder: ALBERTI, Peter, 38553 Wasbüttel (DE); KAMMEYER, Jasper, 30169 Hannover (DE); BARTOLOME, Javier, 38102 Braunschweig (DE); WERNER, Ronny, 01612 Glaubitz (DE)
(86) Internationale Anmeldenummer: PCT/EP2017/077970
(87) Internationale Veröffentlichungsnummer: WO 2018/091269

(56) Entgegenhaltungen:
- EP-A2- 1 947 299
- WO-A1-2015/091268
- DE-A1-102004 003 209
- DE-A1-102006 053 710
- DE-A1-102012 013 595
- DE-A1-102015 209 704
- US-A1- 2016 123 333
- US-B2- 7 350 356

## Beschreibung

Die Erfindung betrifft einen Verdichter sowie einen Abgasturbolader mit einem solchen Verdichter. Die Erfindung betrifft weiterhin eine einen solchen Verdichter umfassende Brennkraftmaschine.

In einem Verdichter einer Brennkraftmaschine wird das über einen Frischgasstrang einem Verbrennungsmotor der Brennkraftmaschine zugeführte Frischgas verdichtet. Dabei ist die Druckanhebung von der Drehzahl des Verdichterlaufrads sowie von dem Massenstrom des über das Verdichterlaufrad geführten Frischgases abhängig. In Richtung der Pumpgrenze des Verdichterkennfelds erfolgt die Anströmung der Eintrittskanten der Laufradschaufeln infolge der gegenüber der Umfangsgeschwindigkeit abnehmende Anströmgeschwindigkeit zunehmend druckseitig, d.h. die Inzidenz der Anströmung nimmt stetig zu. Ab einem betriebspunktabhängigen Grenzwert der Inzidenz, der sogenannten Pumpgrenze, löst die Strömung an den Eintrittskanten ab und die Strömung im Verdichter wird instabil.

Im Bereich der Pumpgrenze bildet sich an der einlassseitigen Gehäusekontur des Verdichters ein Rückströmgebiet impulsarmen Fluids aus. Diese sogenannte Rückströmblase führt durch Drall- und Mischungsverluste zu einem Abfall des Verdichterwirkungsgrads. Im Bereich der Nabenkontur des Laufrads verläuft aber auch nahe der Pumpgrenze eine impulsreiche und verlustärmere Kernströmung durch den Verdichter, die den Massendurchsatz und den Druckaufbau bestimmt.

Ein Trimsteller, wie er beispielsweise aus der DE 10 2010 026 176 A1 bekannt ist, dient der Verschiebung der Pumpgrenze eines Verdichterkennfelds in Richtung niedrigerer Massenströme bei hohen Druckverhältnissen. Gleichzeitig kann ein Trimsteller im Bereich der Pumpgrenze einen Anstieg des Verdichterwirkungsgrads bewirken. Hierzu umfasst ein Trimsteller eine Vorrichtung, durch die der Anströmquerschnitt, in dem das Laufrad des Verdichters angeströmt wird, veränderbar ist. Durch die so erreichte Düsenwirkung des Trimstellers kann mit zunehmendem Regeleingriff (Verkleinerung des Anströmquerschnitts) die Gasströmung stärker auf den nabennahen Eintrittsquerschnitt des Verdichterlaufrads fokussiert werden. Dadurch strömt weniger Gas in den impulsarmen und verlustbehafteten Bereich der Rückströmblase und die Kernströmung im nabennahen Bereich wird beschleunigt und dadurch zusätzlich stabilisiert. Die Beschleunigung der Gasströmung im nabennahen Bereich des Verdichterlaufrads hat zusätzlich eine saugseitige Verschiebung der Anströmung des Verdichterlaufrads zur Folge, was zu einer weiteren Stabilisierung der Gasströmung beitragen kann. Die Stabilisierung der Kernströmung führt zu der gewünschten Verschiebung der Pumpgrenze des Verdichterkennfelds zu geringeren Massenströmen. Bei nicht gewünschtem Regeleingriff (Trimsteller vollständig geöffnet) wird möglichst der gesamte Querschnitt des Frischgasstrangs vor dem Verdichterlaufrad freigegeben, so dass in der Anströmung des Verdichterlaufrads möglichst keine zusätzlichen Reibungs- oder Drosselverluste entstehen. Der Verdichterwirkungsgrad und die Breite des Verdichterkennfelds werden deshalb in Richtung der Stopfgrenze nicht wesentlich negativ durch einen Trimsteller beeinflusst.

Der aus der DE 10 2010 026 176 A1 bekannte Trimsteller umfasst einen Konus, der in einer Ausführungsform aus einer Mehrzahl von Lamellen besteht. Die Lamellen sind in zwei Schichten angeordnet, wobei die Lamellen jeder Schicht zueinander beabstandet und die zwei Schichten zueinander rotatorisch versetzt sind, so dass die Lamellen einer Schicht die Abstände zwischen den Lamellen der jeweiligen anderen Schicht überdecken. Mittels eines in längsaxialer Richtung verschiebbaren, die Lamellen außenseitig umgebenden Rings können die den Austrittsquerschnitt des Konus ausbildenden Enden der Lamellen radial verschoben werden. Dadurch verändert sich die Größe des Austrittsquerschnitt und damit des Anströmquerschnitts, in dem das Verdichterlaufrad angeströmt wird.

Bei heutigen Brennkraftmaschinen wird häufig eine Niederdruckabgasrückführung (ND-AGR) eingesetzt, um gesetzlich vorgeschriebene Emissionsgrenzwerte zu erreichen. Das stromab einer Turbine eines Abgasturboladers entnommene Abgas wird dabei über eine Rückführleitung vor dem Verdichter des Abgasturboladers eingeleitet und von diesem mit dem Frischgas angesaugt. Dabei sollte die Einleitung des rückgeführten Abgases möglichst nahe vor dem Verdichter erfolgen, um eine nicht gewünschte Kondensatbildung im Frischgas zu vermeiden oder gering zu halten. Für die Regelung der ND-AGR-Rate wird in die ND-AGR-Einleitung häufig ein Regelventil integriert.

Sowohl die Mündung der Niederdruckabgasrückführung als auch der Trimsteller sollten funktionsbedingt so dicht wie möglich vor dem Laufrad des Verdichters angeordnet sein, was eine konkurrierende Bauraumsituation zur Folge hat.

Aus der DE 10 2015 209 704 A1 ist ein gattungsgemäßer Verdichter bekannt. Bei diesem Verdichter ist innerhalb eines Einlasskanals ein rohrförmiges Strömungsleitelement angeordnet, dessen Längsachse koaxial zu der Rotationsachse des Verdichterlaufrads ausgerichtet ist und durch das der Einlasskanal in einen zentralen Strömungsbereich sowie einen peripheren Strömungsbereich unterteilt ist. Das rohrförmige Strömungsleitelement geht an seinem einlassseitigen Ende in ein ringscheibenförmiges, radial verlaufendes Stützelement über, das unter anderem dazu dient, das Strömungsleitelement innerhalb des Einlasskanals positioniert zu halten. In dem Stützelement sind in gleichmäßiger Teilung eine Mehrzahl von Durchtrittsöffnungen vorgesehen, durch die das Frischgas in den peripheren Strömungsbereich des Einlasskanals strömen kann. Die Durchtrittsöffnungen in dem Stützelement sind mittels einer ringscheibenförmigen Verschlussblende, die korrespondierende Durchtrittsöffnungen aufweist, verschließbar, indem die Verschlussblende relativ zu dem Stützelement verdreht wird, wodurch die Durchtrittsöffnungen in dem Stützelement sowie in der Verschlussblende entweder vollständig, teilweise oder nicht in Überdeckung gebracht werden. Die Einheit aus rohrförmigem Strömungsleitelement, Stützelement und Verschlussblende weist die Funktion eines Trimstellers auf, da mittels dieser in Abhängigkeit von der Verschlussstellung der Verschlussblende das zu dem Verdichterlaufrad strömende Gas vollständig über den zentralen Strömungsbereich und damit auf einen nabennahen Abschnitt des Eintrittsquerschnitts des Verdichterlaufrads oder in einem in Abhängigkeit von der Stellung der Verschlussblende mehr oder weniger großen Verhältnis zusätzlich auch über den peripheren Strömungsbereich auf einen randseitigen Abschnitt des Eintrittsquerschnitts des Verdichterlaufrads geleitet werden kann. Bei dem Verdichter gemäß der DE 10 2015 209 704 A1 mündet zusätzlich in den peripheren Strömungsbereich und damit stromab des mittels der Verschlussblende mehr oder weniger verschließbaren Stützelements eine Niederdruckabgasrückführung. Vorteilhaft daran ist, dass auf diese Weise sowohl der Trimsteller (und konkret das laufradseitige Ende des rohrförmigen Strömungsleitelements) als auch die Mündung der Niederdruckabgasrückführung in möglichst geringer Distanz zu der Eintrittsebene des Verdichterlaufrads positioniert werden können. Hinzu kommt, dass der Trimsteller zusätzlich die Funktion eines Regelventils für die Niederdruckabgasrückführung übernehmen kann, da durch die Stellung der Verschlussblende die Erzeugung eines Unterdrucks in dem peripheren Strömungsbereich beeinflusst werden kann.

Ein Verdichter mit einem Trimsteller ist weiterhin aus der WO 2015/091268 A1 bekannt. Dort wird der Trimmsteller von einem mit einer zentralen Durchgangsöffnung versehenen (rohrförmigen) Leitkörper ausgebildet, der zentral innerhalb eines Abschnitt eines Einlasskanals des Verdichters in Längsrichtung verschiebbar angeordnet ist. Zwischen der Außenseite des Leitkörpers und der Wandung des Einlasskanals ist ein peripherer Strömungsbereich ausgebildet, der verschließbar ist, indem der Leitkörper in eine seiner beiden Endstellungen vorschoben wird, in der dieser die Wandung des Einlasskanals kontaktiert.

Der Erfindung lag die Aufgabe zugrunde, einen gattungsgemäßen Verdichter hinsichtlich der Breite des Verdichterkennfelds, des Verdichterwirkungsgrads und/oder hinsichtlich einer wirksamen Einleitung von rückzuführendem Abgas zu verbessern.

Diese Aufgabe wird mittels eines Verdichters gemäß dem Patentanspruch 1 gelöst. Ein Abgasturbolader mit einem solchen Verdichter sowie eine Brennkraftmaschine mit einem solchen Verdichter sind Gegenstände der Patentansprüche 12 und 13. Vorteilhafte Ausgestaltungen des erfindungsgemäßen Verdichters und damit des erfindungsgemäßen Abgasturboladers und/oder der erfindungsgemäßen Brennkraftmaschine sind Gegenstände der weiteren Patentansprüche.

Erfindungsgemäß ist ein Verdichter, insbesondere ein Radialverdichter, vorgesehen, der ein (ein- oder mehrteiliges) Gehäuse, das einen Strömungsraum, innerhalb dessen ein Verdichterlaufrad drehbar gelagert ist, und einen Einlasskanal, der einen Einlass des Verdichters mit dem Strömungsraum verbindet, ausbildet, wobei in dem Einlasskanal ein rohrförmiges Strömungsleitelement (mit beliebigem, vorzugsweise jedoch zumindest abschnittsweise kreisringförmigem Wandquerschnitt) angeordnet ist, durch das zumindest ein Abschnitt des Einlasskanals in einen zentralen Strömungsbereich und einen (den zentralen Strömungsbereich umgebenden) peripheren Strömungsbereich unterteilt ist, die beide in dem Bereich der Eintrittsebene des Verdichterlaufrads in den Strömungsraum übergehen. Weiterhin ist vorgesehen, dass in den peripheren Strömungsbereich eine Abgasrückführung, insbesondere eine Niederdruckabgasrückführung, mündet und der periphere Strömungsbereich in einem stromauf des Einlasses der Abgasrückführung gelegenen Abschnitt mittels einer Verschlussvorrichtung verschließbar ausgebildet ist.

"Verschließbar" ist dabei so zu verstehen, dass für die Verschlussvorrichtung zumindest eine Verschlussstellung vorgesehen ist, in der der periphere Strömungsbereich in dem stromauf der Mündung der Abgasrückführung gelegenen Abschnitt durch die Verschlussvorrichtung (relativ, d.h. im Vergleich zu einer Öffnungsstellung, weitgehend und insbesondere möglichst vollständig) verschlossen ist, und eine Öffnungsstellung vorgesehen ist, in der der periphere Strömungsbereich in dem stromauf der Mündung der Abgasrückführung gelegenen Abschnitt durch das Verschlusselement (relativ, d.h. im Vergleich zu der Verschlussstellung, weitgehend und vorzugsweise so weit wie möglich) freigegeben ist.

Grundsätzlich besteht die Möglichkeit, dass für die Verschlussvorrichtung mehr als zwei Stellungen vorgesehen sind. Beispielsweise können eine Verschlussstellung, in der die Verschlussvorrichtung den peripheren Strömungsbereich möglichst vollständig verschließt, eine Öffnungsstellung, in der die Verschlussvorrichtung den peripheren Strömungsbereich möglichst weitgehend freigibt, und eine oder mehrere Zwischenstellungen vorgesehen sein, in der die Verschlussvorrichtung den peripheren Strömungsbereich in mehr oder weniger großem Ausmaß (teilweise) verschließt, vorgesehen sein.

Bei einem erfindungsgemäßen Verdichter ist weiterhin vorgesehen, dass das Strömungsleitelement in einem längsaxial mittig gelegenen Abschnitt mindestens eine Überströmöffnung aufweist.

Ein erfindungsgemäßer Verdichter ist zudem dadurch gekennzeichnet, dass zumindest ein dem Verdichterlaufrad benachbarter Endabschnitt des Strömungsleitelements, vorzugsweise das gesamte Strömungsleitelement, längsaxial verschiebbar ausgebildet ist, wobei der periphere Strömungsbereich in dem Bereich der Eintrittsebene des Verdichterlaufrads in einer Verschlussstellung (zumindest dieses Endabschnitts oder des gesamten Strömungsleitelements) durch diesen Endabschnitt (relativ, d.h. im Vergleich zu einer Öffnungsstellung, weitgehend und insbesondere möglichst vollständig) verschlossen ist und in einer Öffnungsstellung (relativ, d.h. im Vergleich zu der Verschlussstellung, weitgehend) freigegeben ist.

Grundsätzlich besteht dabei die Möglichkeit, dass für das Strömungsleitelement mehr als zwei (Verschiebe-)Stellungen vorgesehen sind. Beispielsweise können eine Verschlussstellung, in der das Strömungsleitelement den peripheren Strömungsbereich in dem Bereich der Eintrittsebene des Verdichterlaufrads möglichst vollständig verschließt, eine Öffnungsstellung, in der das Strömungsleitelement den peripheren Strömungsbereich in diesem Bereich möglichst weitgehend freigibt, und eine oder mehrere Zwischenstellungen vorgesehen sein, in der das Strömungsleitelement den peripheren Strömungsbereich in dem Bereich der Eintrittsebene des Verdichterlaufrads in mehr oder weniger großem Ausmaß (teilweise) verschließt, vorgesehen sein.

Die Verschlussvorrichtung umfasst ein radial verlaufendes Stützelement, das auch dazu dienen kann, das Strömungsleitelement oder zumindest einen Abschnitt davon innerhalb des Einlasskanals positioniert zu halten. In dem Stützelement sind eine oder (beispielsweise in gleichmäßiger Teilung) eine Mehrzahl von Durchgangsöffnungen vorgesehen sein, die durch einen oder mehrere Verschlussabschnitte voneinander getrennt sind und durch die das Frischgas in den peripheren Strömungsbereich des Einlasskanals strömen kann. Die Durchgangsöffnungen in dem Stützelement können mittels einer vorzugsweise ringscheibenförmigen Verschlussblende, die ebenfalls eine oder mehrere (durch eine oder mehrere Verschlussabschnitte voneinander getrennte) Durchgangsöffnungen aufweist, verschließbar sein, indem die Verschlussblende relativ zu dem Stützelement um eine Rotationsachse verdreht wird, wodurch die Durchgangsöffnungen in dem Stützelement sowie in der Verschlussblende entweder vollständig, teilweise oder nicht in Überdeckung gebracht beziehungsweise die Durchgangsöffnung(en) in dem Stützelement vollständig, mehr oder weniger teilweise oder nicht von dem oder den Verschlussabschnitten der Verschlussblende überdeckt werden.

Die Verschlussblende umfasst mindestens zwei Teilblenden, die relativ zueinander um die Rotationsachse drehbar und (unmittelbar oder unter Zwischenschaltung mindestens eines anderen Bauteils) axial (bezüglich der Rotationsachse) hintereinander angeordnet sind. Mittels einer solchen Ausgestaltung der Verschlussblende wird ermöglicht, die in der weitestmöglich geöffneten Stellung der Verschlussvorrichtung freigegebene Gesamtfläche der Durchgangsöffnung(en) des Stützelements und damit die von (Frisch-)Gas durchströmbare Durchtrittsfläche der Verschlussvorrichtung größer als und insbesondere doppelt so groß wie die gleichzeitig von der Verschlussvorrichtung für die (Frisch-)Gasströmung versperrte Querschnittsfläche auszubilden. Dazu kann insbesondere vorgesehen sein, dass die Teilblenden jeweils einen oder mehrere Verschlussabschnitte ausbilden, wobei die Umfangsbreiten (d.h. die mittlere Breite eines Versschlussabschnitts in Umfangsrichtung um die Rotationsachse) der einzelnen Verschlussabschnitte der Teilblenden kleiner als die Umfangsbreite(n) des/der Durchgangsöffnung(en) des Stützelements ausgebildet sind und die Summe der Umfangsbreiten von jeweils einem Verschlussabschnitt der (aller) Teilblenden gleichgroß oder größer als die Umfangsbreite(n) des/der (einzelnen) Durchgangsöffnung(en) des Stützelements ist. Besonders bevorzugt kann dabei vorgesehen sein, dass die Umfangsbreiten der Verschlussabschnitte des Stützelements und der Teilblenden einerseits gleich groß und andererseits 1/n mal so groß wie die Umfangsbreite(n) des/der Durchgangsöffnung(en) des Stützelements sind, wobei n die Anzahl der Teilblenden ist. Dadurch kann die von dem Gas durchströmbare Durchtrittsfläche der Verschlussvorrichtung in der weitestmöglich geöffneten Stellung maximiert werden.

Als "Eintrittsebene" des Verdichterlaufrads wird erfindungsgemäß die dem Einlass nächstgelegene, senkrecht zur Rotationsachse des Verdichterlaufrads ausgerichteten Ebene verstanden, die von Laufradschaufeln des Verdichterlaufrads definiert wird, indem zumindest ein punktförmiger Abschnitt eines, mehrerer oder aller Eintrittskanten dieser Laufradschaufeln innerhalb dieser Ebene angeordnet ist.

Ein erfindungsgemäßer Abgasturbolader umfasst neben einem erfindungsgemäßen Verdichter zumindest noch eine Turbine, die ein in einem Turbinengehäuse drehbar gelagertes Turbinenlaufrad aufweist, wobei das Turbinenlaufrad drehantreibend, insbesondere über eine Welle, mit dem Verdichterlaufrad verbunden ist.

Eine erfindungsgemäße Brennkraftmaschine umfasst zumindest einen Verbrennungsmotor (vorzugsweise Diesel- oder Ottomotor), einen Frischgasstrang, über den Frischgas einem oder mehreren Brennräumen des Verbrennungsmotors zuführbar ist, einen Abgasstrang, über den Abgas, das durch eine Verbrennung eines Gemischs aus den Brennräumen zugeführtem Kraftstoff und Frischgas entstanden ist, abführbar ist, sowie einen in den Frischgasstrang integrierten, erfindungsgemäßen Verdichter oder einen erfindungsgemäßen Abgasturbolader, wobei der Verdichter in den Frischgasstrang und die Turbine, sofern vorhanden, in den Abgasstrang integriert ist/sind.

Durch die Verschiebbarkeit des Strömungsleitelements oder zumindest des dem Verdichterlaufrad benachbarten Endabschnitts davon kann, in der Öffnungsstellung, erreicht werden, dass sowohl über den zentralen Strömungsbereich als auch über den peripheren Strömungsbereich ein möglichst großer Massenstrom an Frischgas und gegebenenfalls rückgeführtem Abgas durch den Einlasskanal zu dem Verdichterlaufrad geführt werden und in das Verdichterlaufrad über im Wesentlichen dessen gesamte Eintrittsfläche eintreten kann. Dies kann insbesondere bei einem Betrieb des Verbrennungsmotors einer erfindungsgemäßen Brennkraftmaschine mit relativ hohen Drehzahlen vorteilhaft sein, um eine durch das Strömungsleitelement bedingte Verschiebung der Stopfgrenze des Verdichterkennfelds hin zu relativ kleinen Massenströmen und/oder eine relevante Verschlechterung des Verdichterwirkungsgrads zu vermeiden. Andererseits kann in der Verschlussstellung des Strömungsleitelements oder zumindest von dessen Endabschnitt eine Ausbildung einer Rückströmblase in dem Einlasskanal und insbesondere in dem peripheren Strömungsbereich verhindert werden. Weiterhin kann, da das laufradseitige Ende des Strömungsleitelements vorzugsweise derart ausgebildet ist, dass dieses eine relativ große randseitige Überdeckung des Eintrittsquerschnitts des Strömungsraums und damit der Eintrittsfläche des Verdichterlaufrads bewirkt, insbesondere bei einem Betrieb des Verbrennungsmotors mit relativ niedrigen Drehzahlen, eine Fokussierung der Frischgasströmung auf einen zentralen Abschnitt des Verdichterlaufrads mit den bereits beschriebenen Vorteilen realisiert werden.

Dementsprechend kann in vorteilhafter Weise vorgesehen sein, dass
- bei einem Betrieb der Brennkraftmaschine in einem ersten Betriebszustand, der durch im Vergleich zu einem zweiten Betriebszustand relativ niedrige Drehzahlen des Verbrennungsmotors (z.B. ≤ 2000 1/Min) gekennzeichnet ist, die Verschlussstellung für das Strömungsleitelement eingestellt ist und
- bei einem Betrieb der Brennkraftmaschine in dem zweiten Betriebszustand, der durch relativ hohe Drehzahlen des Verbrennungsmotors gekennzeichnet ist, die Öffnungsstellung des Strömungsleitelements eingestellt ist.

Die Erfindung betrifft daher auch ein entsprechendes Verfahren zum Betreiben einer erfindungsgemäßen Brennkraftmaschine. Zur Durchführung eines solchen Verfahrens kann eine erfindungsgemäße Brennkraftmaschine eine Steuerungsvorrichtung, die einen zur Verschiebung zumindest des Endabschnitts des Strömungsleitelements vorgesehenen Aktor entsprechend ansteuert, aufweisen.

Durch die Verschließbarkeit des peripheren Strömungsbereichs in dem stromauf der Mündung der Abgasrückführung gelegenen Abschnitt mittels der Verschlussvorrichtung kann im Zusammenwirken mit der mindestens einen Überströmöffnung, die das Strömungsleitelement in einem längsaxial mittig gelegenen Abschnitt ausbildet, in vorteilhafter Weise eine Erzeugung eines relativ hohen Unterdrucks innerhalb des peripheren Strömungsbereichs und damit auch im Bereich der Mündung der Abgasrückführung realisiert werden, wodurch ein Überführen von Abgas aus dem Abgasstrang in den Frischgasstrang über die Abgasrückführung positiv beeinflusst werden kann. Dies kann insbesondere bei einem Betrieb der Brennkraftmaschine in dem ersten Betriebszustand, d.h. mit relativ niedrigen Drehzahlen des Verbrennungsmotors, vorteilhaft sein, weil dann der Druck im Abgasstrang in der Regel nicht so hoch ist, dass ohne ergänzende Maßnahmen ein ausreichendes Druckgefälle über der Abgasrückführung realisiert ist.

Dementsprechend kann für den Betrieb einer erfindungsgemäßen Brennkraftmaschine weiterhin vorgesehen sein, dass
- bei einem Betrieb der Brennkraftmaschine in dem ersten Betriebszustand und zusätzlich bei relativ hoher Last, insbesondere ausschließlich bei Volllast (erster Unterbetriebszustand), der periphere Strömungsbereich in dem stromauf der Mündung der Abgasrückführung gelegenen Abschnitt freigegeben ist und
- bei einem Betrieb der Brennkraftmaschine in dem ersten Betriebszustand und zusätzlich bei relativ niedriger Last, insbesondere immer mit Ausnahme bei Volllast (zweiter Unterbetriebszustand), der periphere Strömungsbereich in dem stromauf des Einlasses der Abgasrückführung gelegenen Abschnitt verschlossen ist.

Dabei wird ergänzend dem Umstand Rechnung getragen, dass bei einem Betrieb des Verbrennungsmotors mit relativ niedrigen Drehzahlen aber hoher Last und insbesondere bei Volllast eine Abgasrückführung regelmäßig nicht oder in einem nur sehr eingeschränkten Maße vorgesehen sein kann und in diesem (ersten Unter-)Betriebszustand primär das Erreichen eines bestmöglichen Verdichterwirkungsgrads im Vordergrund steht, um ein möglichst schnelles Ansprechen des Verdichters nach einem Lastsprung zu erreichen. Dies wird durch das Freigegeben des peripheren Strömungsbereichs in dem stromauf des Einlasses der Abgasrückführung gelegenen Abschnitt erreicht, wodurch Frischgas dann nicht nur durch den zentralen Strömungsbereich sondern auch (abschnittsweise) durch den peripheren Strömungsbereich strömen kann. Gleichzeitig wird eine sich positiv hinsichtlich der Pumpgrenze auswirkende zentrale Anströmung des Verdichterlaufrads erreicht, weil sich das Strömungsleitelement oder zumindest der Endabschnitt davon in der Verschlussstellung befindet. Ein Überströmen der Teilströmung des Frischgases, die aufgrund der geöffneten Verschlussvorrichtung in den peripheren Strömungsbereich eingetreten ist, in den zentralen Strömungsbereich wird dabei durch die mindestens eine Überströmöffnung in dem Strömungsleitelement ermöglicht.

Die positive Wirkung, die durch das Verschließen des peripheren Strömungsbereichs in dem stromauf der Mündung der Abgasrückführung gelegenen Abschnitt hinsichtlich der Erzeugung eines Druckgefälles über der Abgasrückführung erreicht werden kann, kann ausreichend sein, um in sämtlichen Betriebszuständen innerhalb des zweiten Unterbetriebszustand (relativ niedrige Drehzahlen und relativ niedrige Lasten) eine Rückführung von Abgas über die Abgasrückführung grundsätzlich in ausreichendem Maße zu realisieren. Daher kann bei einer erfindungsgemäßen Brennkraftmaschine auf eine in dem Abgasstrang angeordnete Abgasklappe, die bei konventionellen Brennkraftmaschinen zur bedarfsweise Erzeugung eines Überdrucks in dem Abschnitt des Abgasstrangs, aus dem die Abgasrückführung abgeht, regelmäßig vorgesehen ist, verzichtet werden. Dies gilt auch, weil eine solche Abgasklappe in den anderen Betriebszuständen, d.h. in dem ersten Unterbetriebszustand des ersten Betriebszustand sowie in dem zweiten Betriebszustand der Brennkraftmaschine, grundsätzlich entbehrlich sein kann, weil ein ausreichendes Druckgefälle bereits auch aufgrund eines entsprechend hohen Drucks im Abgasstrang gegeben ist und/oder eine Abgasrückführung nicht oder in einem nur sehr geringen Maße vorgesehen ist. Ein Verzicht auf eine solche Abgasklappe kann sich positiv hinsichtlich der Herstellungskosten für eine erfindungsgemäße Brennkraftmaschine auswirken.

Vorzugsweise kann jedoch ein in die Abgasrückführung integriertes Regelventil vorgesehen sein, um insbesondere bei einem Betrieb der Brennkraftmaschine in dem zweiten Unterbetriebszustand (relativ niedrige Drehzahlen und relativ niedrige Lasten) die Menge des über die Abgasrückführung rückzuführenden Abgases bedarfsgerecht steuern oder regeln zu können.

Grundsätzlich besteht die Möglichkeit, dass der erste Betriebszustand in mehr als die zwei definierten Unterbetriebszustände unterteilt ist, die sich durch das Ausmaß, in dem der periphere Strömungsbereich durch die Verschlussvorrichtung verschlossen beziehungsweise freigegeben wird, unterscheiden. Eine Einstellung der verschiedenen Unterbetriebszustände kann dann insbesondere in Abhängigkeit von dem Betrieb des Verbrennungsmotors mit unterschiedlichen Drehzahlen und/oder Lasten erfolgen.

Ebenso besteht die Möglichkeit, dass der zweite Betriebszustand in zwei oder mehr Unterbetriebszustände unterteilt ist, die sich durch das Ausmaß, in dem der periphere Strömungsbereich in dem Bereich der Eintrittsebene des Verdichterlaufrads mittels des Endabschnitts des Strömungsleitelements verschlossen beziehungsweise freigegeben ist, unterscheiden. Auch dabei kann eine Einstellung der verschiedenen Unterbetriebszustände insbesondere in Abhängigkeit von dem Betrieb des Verbrennungsmotors mit unterschiedlichen Drehzahlen und/oder Lasten erfolgen.

Um für eine Verstellung der aus mindestens zwei Teilblenden bestehenden Verschlussblende eine Betätigung (Drehung) mittels lediglich eines Aktors zu ermöglichen, kann vorzugsweise vorgesehen sein, dass Anschlagelemente der Teilblenden vorgesehen sind, die, ausgehend von der weitestmöglich geschlossenen und/oder ausgehend von der weitestmöglich geöffneten Stellung der Verschlussvorrichtung, eine Drehung der zweiten Teilblende erst nach einem definierten Drehbewegungsabschnitt der ersten Teilblende an eine Drehung der ersten Teilblende koppeln.

Weiterhin können Anschlagelemente des Stützelements und der Verschlussblende vorgesehen sein, die in der weitestmöglich geschlossenen Stellung und der weitestmöglich geöffneten Stellung der Verschlussvorrichtung kontaktieren, so dass ein Verdrehen der Verschlussblende relativ zu dem Stützelement nur zwischen diesen beiden Stellungen möglich ist. Ein Einstellen dieser Stellungen mittels eines Aktors kann dadurch vereinfacht werden.

Ergänzend zu der Ausgestaltung der Verschlussvorrichtung mit einem Stützelement sowie mit einer dazu drehbaren Verschlussblende kann auch vorgesehen sein, dass die Verschlussvorrichtung ein vorzugsweise plattenförmiges und weiterhin bevorzugt kreisringförmiges Verschlusselement ausbildet, dass in Richtung einer Längsachse des Einlasskanals (mittels eines Aktors) verschiebbar ist, wobei in einer Öffnungsstellung des Verschlusselements ein ringförmiger Spalt zwischen dem Verschlusselement und der von dem Einlasskanal ausgebildeten Wandung ausgebildet ist, der in einer Verschlussstellung des Verschlusselements minimiert und insbesondere möglichst vollständig geschlossen ist.

Gemäß einer bevorzugten Ausgestaltungsform eines erfindungsgemäßen Verdichters kann eine (vorzugsweise innerhalb des peripheren Strömungsbereichs angeordnete) Leitvorrichtung zur Erzeugung eines Dralls (um die Rotationsachse des Verdichterlaufrads) für eine aus Richtung des Verdichtereinlasses in den peripheren Strömungsbereich eintretende (Frisch-)Gasströmung vorgesehen sein. Die Drehrichtung der Drallströmung kann dabei besonders bevorzugt zu der für das Verdichterlaufrad vorgesehenen Drehrichtung entgegengesetzt ausgerichtet sein. Durch eine solche Ausgestaltungsform eines erfindungsgemäßen Verdichters kann sich eine vorteilhafte Anströmung für das Verdichterlaufrad durch über den peripheren Strömungsabschnitt zugeführtes (Frisch-)Gas ergeben. Insbesondere kann dadurch ein relativ hoher Durchsatz an (Frisch-)Gas bei hohen Massenströmen erreicht werden.

Bei der Verschlussvorrichtung eines erfindungsgemäßen Verdichters, die ein Stützelement umfasst, das eine oder mehrere Durchgangsöffnungen und einen oder mehrere Verschlussabschnitte ausbildet, kann zur Ausbildung der Leitvorrichtung in vorteilhafter Weise vorgesehen sein, dass diese eine oder mehrere (schräg bezüglich der Rotationsachse des Verdichterlaufrads ausgerichtete) Leitflächen ausbildet, die sich (jeweils) von einem eine Durchgangsöffnung begrenzenden Rand eines/des Verschlussabschnitts des Stützelements erstreckt/erstrecken. Dabei können sich die Leitflächen ausgehend von der Verschlussvorrichtung insbesondere in Richtung des Verdichterlaufrads erstrecken. Entsprechende Leitflächen können auch von der Durchgangsöffnungen und Verschlussabschnitte aufweisenden Verschlussblende ausgebildet sein.

Bei einem erfindungsgemäßen Verdichter kann zur Erzielung einer vorteilhaften Anströmung des Verdichterlaufrads vorzugsweise vorgesehen sein, dass die Längsachse des gesamten Strömungsleitelements parallel oder (besonders bevorzugt) koaxial zu der Rotationsachse des Verdichterlaufrads angeordnet ist. Alternativ dazu besteht auch die Möglichkeit ein, dass die Längsachse in zumindest einem Abschnitt, gegebenenfalls die Längsachse des gesamten Strömungsleitelements und/oder die Längsachse des Einlasskanals schräg bezüglich der Rotationsachse des Verdichterlaufrads angeordnet ist/sind. Dies kann insbesondere aufgrund einer entsprechenden Schrägstellung des Einlasskanals infolge von beispielsweise Einschränkungen hinsichtlich des zur Verfügung stehenden Bauraums für den Verdichter der Fall sein.

Weiterhin bevorzugt kann vorgesehen sein, dass das laufradseitige (d.h. das bezüglich der Eintrittsebene des Verdichterlaufrads proximale) Ende des Strömungsleitelements, das weiterhin bevorzugt eine in einer Ebene, die senkrecht zu der Längsachse ausgerichtet ist, liegende umlaufende Kante aufweist, in der Verschlussstellung des Endabschnitts oder des gesamten Strömungsleitelements in einem möglichst kleinen Abstand, der insbesondere auch null betragen kann, zu der Eintrittsebene des Verdichterlaufrads angeordnet ist. Auf diese Weise kann eine besonders vorteilhafte randseitige Überdeckung der Eintrittsfläche des Verdichterlaufrads erreicht werden, wodurch im besonderen Maße die Ausbildung einer Rückströmblase unterdrückt werden kann.

Vorteilhaft insbesondere hinsichtlich der Lage der Pumpgrenze des Verdichterkennfelds eines erfindungsgemäßen Verdichters kann sich auswirken, wenn der Strömungsquerschnitt des zentralen Strömungsbereichs an dem laufradseitigen Ende des Strömungsleitelements zwischen 60% und 70% der Eintrittsfläche des Verdichterlaufrads beträgt. Als "Eintrittsfläche" des Verdichterlaufrads wird dabei diejenige Fläche innerhalb einer Eintrittsebene des Verdichterlaufrads verstanden, die von Eintrittskanten von Laufradschaufeln des Verdichterlaufrads insgesamt (d.h. über einer vollen Umdrehung des Verdichterlaufrads) überdeckt wird, verstanden.

Um eine möglichst vorteilhafte Anströmung des Verdichterlaufrads auch über den peripheren Strömungsbereich zu erreichen sollte vorzugsweise vorgesehen sein, dass in der Öffnungsstellung des Strömungsleitelements (oder zumindest von dessen Endabschnitt) das laufradseitige Ende des Strömungsleitelements den peripheren Strömungsbereich mit einer Spaltbreite von mindestens 10 mm, vorzugsweise von mindestens 15 mm freigibt.

Positiv hinsichtlich der Anströmung des Verdichterlaufrads durch den zentralen Strömungsbereich kann sich zudem auswirken, wenn sich der Strömungsquerschnitt des zentralen Strömungsbereichs in zumindest einem längsaxialen Abschnitt in der zu dem Verdichterlaufrad weisenden Richtung (insbesondere kontinuierlich und vorzugsweise auch stufenlos) verkleinert. Besonders bevorzugt kann dabei vorgesehen sein, dass das Strömungsleitelement durch die mindestens eine Überströmöffnung in einen Anfangsabschnitt und den Endabschnitt unterteilt ist und sich der Strömungsquerschnitt des zentralen Strömungsbereichs in dem Anfangsabschnitt und/oder in dem Endabschnitt in der zu dem Verdichterlaufrad weisenden Richtung (insbesondere kontinuierlich und vorzugsweise auch stufenlos) verkleinert.

Bei einer solchen Ausgestaltung eines erfindungsgemäßen Verdichters, bei dem das Strömungsleitelement durch die Überströmöffnung in einen Anfangsabschnitt und den Endabschnitt unterteilt ist, kann weiterhin bevorzugt vorgesehen sein, dass der kleinste Strömungsquerschnitt des zentralen Strömungsbereichs innerhalb des Anfangsabschnitts kleiner oder gleich groß im Vergleich zu dem kleinsten Strömungsquerschnitt des zentralen Strömungsbereichs innerhalb des Endabschnitts ist. Dies kann sich insbesondere vorteilhaft hinsichtlich der Erzeugung eines Unterdrucks innerhalb des peripheren Strömungsbereichs und damit hinsichtlich der Rückführung von Abgas über die Abgasrückführung in ausreichender Höhe auswirken, wenn der periphere Strömungsbereich mittels der Verschlussvorrichtung verschlossen ist.

Insbesondere dann, wenn der kleinste Strömungsquerschnitt des zentralen Strömungsbereichs innerhalb des Endabschnitts zwischen 60% und 70%, vorzugsweise zwischen 65% und 70% der Eintrittsfläche des Verdichterlaufrads beträgt, wie dies grundsätzlich bevorzugt vorgesehen ist, kann vorgesehen sein, dass der kleinste Strömungsquerschnitt des zentralen Strömungsbereichs innerhalb des Anfangsabschnitts zwischen 55% und 45%, besonders bevorzugt ca. 50% der Eintrittsfläche des Verdichterlaufrads beträgt.

In einer weiterhin bevorzugten Ausgestaltungsform eines erfindungsgemäßen Verdichters kann vorgesehen sein, dass eine Koppelung zwischen dem Strömungsleitelement oder zumindest dessen Endabschnitt einerseits und der Verschlussvorrichtung andererseits derart vorgesehen ist, dass eine Schließbewegung der Verschlussvorrichtung zu einer Verschiebung zumindest des Endabschnitts des Strömungsleitelements führt. Dadurch kann erreicht werden, dass mittels lediglich eines Aktors der Brennkraftmaschine, der insbesondere von einer Steuerungsvorrichtung der Brennkraftmaschine ansteuerbar ist, sowohl eine Verschiebebewegung des (Endabschnitts des) Strömungsleitelements als auch eine Schließbewegung der Verschlussvorrichtung bewirkt werden kann. Als "Schließbewegung" der Verschlussvorrichtung wird dabei eine Bewegung eines Verschlusselements der Verschlussvorrichtung verstanden, die zu einem zunehmenden Verschließen oder Freigeben des peripheren Strömungsbereichs führt.

Besonders bevorzugt kann bei einem solchen Verdichter dann noch vorgesehen sein, dass die Schließbewegung der Verschlussvorrichtung in einen ersten Abschnitt und einen zweiten Abschnitt unterteilt ist, wobei eine Bewegung innerhalb des ersten Abschnitts ausschließlich ein Verändern der Schließstellung der Verschlussvorrichtung bewirkt, während die Schließbewegung in dem zweiten Abschnitt ausschließlich oder zusätzlich ein Verschieben zumindest des Endabschnitts des Strömungsleitelements bewirkt. Ein "ausschließliches" Verändern der Schließstellung der Verschlussvorrichtung ist dabei so zu verstehen, dass dabei nicht auch ein Verschieben (des Endabschnitts) des Strömungsleitelements bewirkt wird. Dementsprechend wird unter einem "ausschließlichen" Verschieben des (Endabschnitts des) Strömungsleitelements verstanden, dass dabei nicht auch die Schließstellung der Verschlussvorrichtung verändert wird. Mittels einer solchen Ausgestaltung eines erfindungsgemäßen Verdichters kann unter Verwendung lediglich eines einzigen Aktors ergänzend erreicht werden, dass ein Verschieben des (Endabschnitts des) Strömungsleitelements ausschließlich für einen Übergang zwischen dem ersten und dem zweiten Betriebszustand bewirkt wird, während in dem ersten Betriebszustand für einen Übergang von dem ersten Unterbetriebszustand in den zweiten Unterbetriebszustand ausschließlich ein Verändern der Schließstellung der Verschlussvorrichtung vorgesehen ist.

Die Erfindung betrifft weiterhin ein Kraftfahrzeug, insbesondere ein radbasiertes Kraftfahrzeug (vorzugsweise PKW oder LKW), mit einer erfindungsgemäßen Brennkraftmaschine. Dabei kann die Brennkraftmaschine insbesondere zur (direkten oder indirekten) Bereitstellung der Antriebsleistung für das Kraftfahrzeug vorgesehen sein.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die vorliegende Erfindung wird nachfolgend anhand von in den Zeichnungen dargestellten Ausführungsbeispielen näher erläutert. In den Zeichnungen zeigt:
- Fig. 1:: in schematischer Darstellung eine erfindungsgemäße Brennkraftmaschine;
- Fig. 2:: eine Vorderansicht eines nicht erfindungsgemäßen Verdichters gemäß einer ersten Ausgestaltungsform mit sowohl dem Strömungsleitelement als auch der Verschlussvorrichtung in einer Verschlussstellung;
- Fig. 3:: einen Längsschnitt durch einen Abschnitt des Verdichters gemäß der Fig. 2;
- Fig. 4:: eine Vorderansicht des Verdichters mit dem Strömungsleitelement in der Verschlussstellung und der Verschlussvorrichtung in einer Öffnungsstellung;
- Fig. 5:: einen Längsschnitt durch einen Abschnitt des Verdichters gemäß der Fig. 4;
- Fig. 6:: eine Vorderansicht des Verdichters mit sowohl dem Strömungsleitelement als auch der Verschlussvorrichtung in der Öffnungsstellung;
- Fig. 7:: einen Längsschnitt durch einen Abschnitt des Verdichters gemäß der Fig. 6;
- Fig. 8:: in perspektivischen Darstellung das Strömungsleitelement und die Verschlussvorrichtung des Verdichters gemäß den Fig. 6 und 7;
- Fig. 9:: einen Längsschnitt durch das Strömungsleitelement und die Verschlussvorrichtung des Verdichters gemäß den Fig. 6 und 7;
- Fig. 10:: eine perspektivische Explosionsdarstellung eines erfindungsgemäßen Verdichters gemäß einer zweiten Ausgestaltungsform;
- Fig. 11:: eine Vorderansicht des Verdichters gemäß der Fig. 10 mit sowohl dem Strömungsleitelement als auch der Verschlussvorrichtung in einer Verschlussstellung;
- Fig. 12:: einen Längsschnitt durch einen Abschnitt des Verdichters gemäß der Fig. 11;
- Fig. 13:: eine perspektivische Ansicht des Strömungsleitelements und der Verschlussvorrichtung des Verdichters gemäß der Fig. 11 und 12;
- Fig. 14:: eine Vorderansicht des Verdichters gemäß der Fig. 10 mit dem Strömungsleitelement in der Verschlussstellung und der Verschlussvorrichtung in einer ersten Öffnungsstellung;
- Fig. 15:: einen Längsschnitt durch einen Abschnitt des Verdichters gemäß der Fig. 14;
- Fig. 16:: eine perspektivische Ansicht des Strömungsleitelements und der Verschlussvorrichtung des Verdichters in einer annähernd der Stellung gemäß der Fig. 14 und 15 entsprechenden Stellung;
- Fig. 17:: eine Vorderansicht des Verdichters gemäß der Fig. 10 mit dem Strömungsleitelement in einer Öffnungsstellung und der Verschlussvorrichtung in einer zweiten Öffnungsstellung;
- Fig. 18:: einen Längsschnitt durch einen Abschnitt des Verdichters gemäß der Fig. 17;
- Fig. 19:: eine perspektivische Ansicht des Strömungsleitelements und der Verschlussvorrichtung des Verdichters gemäß der Fig. 17 und 18;
- Fig. 20:: einen Längsschnitt durch einen Abschnitt des Strömungsleitelements und der Verschlussvorrichtung in der Stellung gemäß der Fig. 19;
- Fig. 21:: eine Aufsicht auf einen Abschnitt der Strömungsleitelement des Verdichters gemäß den Fig. 10 bis 20.

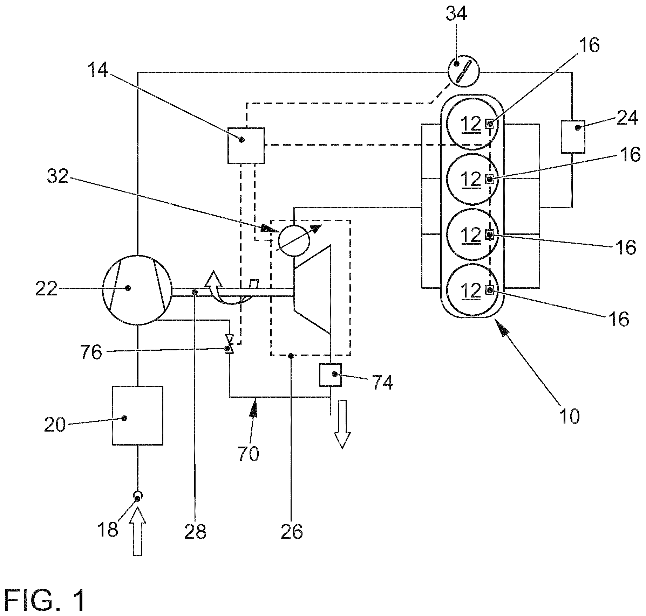

Die Fig. 1 zeigt in schematischer Darstellung eine erfindungsgemäße Brennkraftmaschine mit einem Verbrennungsmotor 10, der eine Mehrzahl von Zylindern 12 ausbildet. Die Zylinder 12 begrenzen gemeinsam mit darin auf und ab geführten Kolben und einem Zylinderkopf (nicht dargestellt) Brennräume, in denen Frischgas (Luft) gemeinsam mit Kraftstoff verbrannt wird. Der Kraftstoff wird dabei, gesteuert durch eine Steuerungsvorrichtung 14 (Motorsteuerung), mittels Injektoren 16 direkt in die Brennräume eingespritzt. Das Verbrennen des Kraftstoff-Frischgas-Gemischs führt zu zyklischen Auf- und Ab-Bewegungen der Kolben, die wiederum in bekannter Weise über nicht dargestellte Pleuel auf eine ebenfalls nicht dargestellte Kurbelwelle übertragen werden, wodurch die Kurbelwelle rotierend angetrieben wird. Das Frischgas wird dem Verbrennungsmotor 10 über einen Frischgasstrang zugeführt und dazu über eine Ansaugmündung 18 aus der Umgebung angesaugt, in einem Luftfilter 20 gereinigt und anschließend in einen erfindungsgemäßen Verdichter 22, der Teil eines erfindungsgemäßen Abgasturboladers ist, geführt. Das Frischgas wird mittels des Verdichters 22 verdichtet, anschließend in einem Ladeluftkühler 24 abgekühlt und den Brennräumen zugeführt. Der Antrieb des Verdichters 22 erfolgt mittels einer Turbine 26 des Abgasturboladers, die in einen Abgasstrang der Brennkraftmaschine integriert ist. Abgas, das bei der Verbrennung des Kraftstoff-Frischgas-Gemischs in den Brennräumen des Verbrennungsmotors 10 entsteht, wird über den Abgasstrang aus dem Verbrennungsmotor 10 abgeführt und durchströmt dabei die Turbine 26. Dies führt in bekannter Weise zu einem rotierenden Antrieb eines Turbinenlaufrads (nicht dargestellt), das über eine Welle 28 drehfest mit einem Verdichterlaufrad 30 (in der Fig. 1 nicht dargestellt) des Verdichters 22 verbunden ist. Der rotierende Antrieb des Turbinenlaufrads wird somit auf das Verdichterlaufrad 30 übertragen.

Um im Betrieb des Verbrennungsmotors 10 mit unterschiedlichen Lasten und unterschiedlichen Drehzahlen eine möglichst optimale Nutzung der Enthalpie des Abgases zur Erzeugung von Verdichtungsleistung mittels des Abgasturboladers realisieren zu können, kann die Turbine 26 des Abgasturboladers optional (insbesondere bei einer Ausgestaltung des Verbrennungsmotors als Dieselmotor) eine mittels der Steuerungsvorrichtung 14 ansteuerbare Vorrichtung zur variablen Turbinenanströmung (VTG) 32 aufweisen. Diese kann in bekannter Weise eine Mehrzahl von in einem Einlass der Turbine 26 angeordnete Leitschaufeln (nicht dargestellt) umfassen, die individuell drehbar ausgebildet sind, wobei diese gemeinsame mittels einer Verstellvorrichtung (nicht dargestellt) verstellbar sind. In Abhängigkeit von den Drehstellungen der Leitschaufeln verengen diese den freien Strömungsquerschnitt in dem Einlass der Turbine mehr oder weniger und beeinflussen zudem den Abschnitt der primären Anströmung des Turbinenlaufrads und die Ausrichtung dieser Anströmung.

Stromab des Verdichters 22 ist in die Ladeluftstrecke, d.h. in den Abschnitt des Frischgasstrangs zwischen dem Verdichter 22 und dem Verbrennungsmotor 10, eine ebenfalls mittels der Steuerungsvorrichtung 14 ansteuerbare Regelklappe 34 integriert. Bei einer Ausgestaltung des Verbrennungsmotors 10 als Ottomotor kann es sich bei dieser Regelklappe 34 um eine Drosselklappe (mit bekannter Funktionalität) handeln. Bei einer Ausgestaltung des Verbrennungsmotors 10 als Dieselmotor kann die primäre Funktion der Regelklappe 34 darin bestehen, kurzfristig nach einem Beenden des Betriebs des Dieselmotors die Ladeluftstrecke zu verschließen, wodurch ein Nachströmen von bereits verdichtetem Frischgas in die Brennräume des Dieselmotors vermieden werden kann.

Die Brennkraftmaschine umfasst weiterhin eine (Niederdruck-)Abgasrückführung 70, durch die Abgas aus einem Abschnitt des Abgasstrangs, der stromab der Turbine 26 und insbesondere auch stromab einer Abgasnachbehandlungsvorrichtung 74, beispielsweise eines Partikelfilters, abgezweigt und in einen Abschnitt des Frischgasstrangs stromauf des Verdichterlaufrads 30, konkret in einen Einlasskanal 40 des Verdichters 22, eingeleitet werden kann. Die Menge des über die (Niederdruck-)Abgasrückführung 70 rückzuführenden Abgases kann dabei mittels eines Regelventils 76, das mittels der Steuerungsvorrichtung 14 ansteuerbar ist, gesteuert oder geregelt werden.

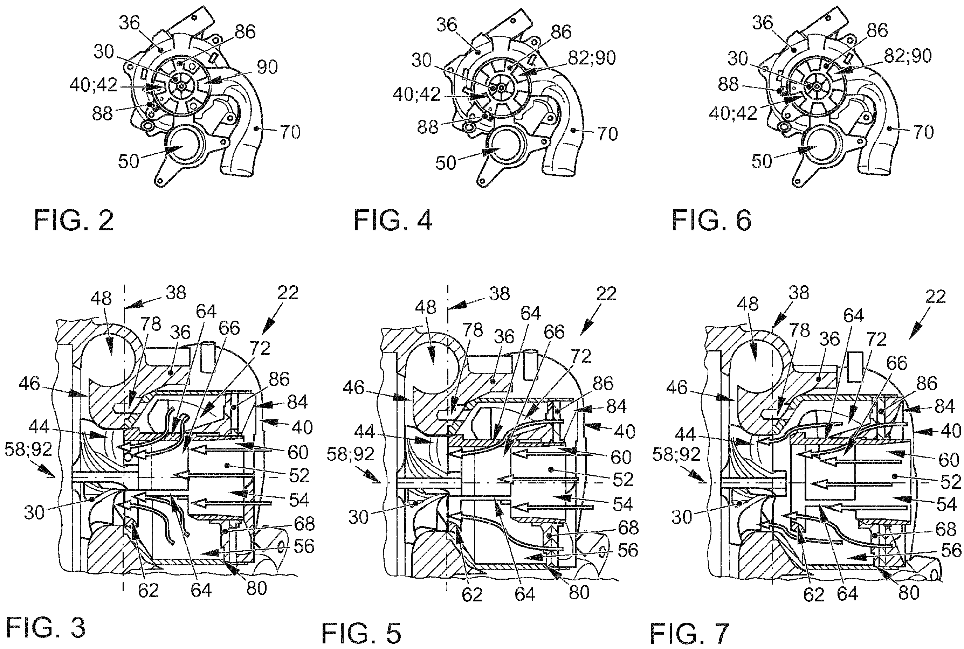

Die Fig. 2 bis 9 zeigen in verschiedenen Ansichten eine erste Ausgestaltungsform eines (Radial-)Verdichters 22, wie er beispielsweise als Teil des Abgasturboladers in einer Brennkraftmaschine gemäß der Fig. 1 zum Einsatz kommen kann.

Der Verdichter 22 umfasst ein mehrteiliges Gehäuse 36, das ein Teilgehäuse eines Gesamtgehäuses eines Abgasturboladers darstellen kann. Das Gehäuse 36 des Verdichters 18 bildet einen Strömungsraum aus, innerhalb dessen das Verdichterlaufrad 30 drehbar gelagert ist. Einlassseitig ist der Strömungsraum durch einen in einer Eintrittsebene 38 liegenden Eintrittsquerschnitt begrenzt. Über einen ebenfalls von dem Gehäuse 36 des Verdichters 22 ausgebildeten Einlasskanal 40 kann Frischgas von einem Verdichtereinlass 42 zu dem Verdichterlaufrad 30 geführt werden. Auslassseitig wird der Strömungsraum von einer um Austrittskanten von Laufradschaufeln 44 des Verdichterlaufrads 30 umlaufenden "Austrittsebene" begrenzt. Dort schließt sich ein ebenfalls um die Austrittskanten der Laufradschaufeln 44 umlaufender Diffusorraum 46 und daran anschließend eine Verdichtervolute 48 an. Aus der Verdichtervolute 48 geht der Verdichterauslass 50 ab. Innerhalb des Einlasskanals 40 ist ein rohrförmiges Strömungsleitelement 52 mit abschnittweise kreisringförmigen Wandquerschnitten angeordnet, wobei eine Längsachse 58 des Strömungsleitelements 52 koaxial bezüglich einer Rotationsachse 58 des Verdichterlaufrads 30 angeordnet ist. Das Strömungsleitelement 52 unterteilt den dieses aufnehmenden Abschnitt des Einlasskanals 40 in einen zentralen Strömungsbereich 54 und einen peripheren Strömungsbereich 56, der zwischen der Außenseite des Strömungsleitelements 52 und der Innenseite der den entsprechenden Abschnitt des Einlasskanals 40 begrenzenden Wandung des Gehäuses 36 ausgebildet ist. Das laufradseitige Ende des Strömungsleitelements 52 wird von einer umlaufenden Kante gebildet, die in einer senkrecht zu der Längsachse 92 des Strömungsleitelements 52 beziehungsweise zu der Rotationsachse 58 des Verdichterlaufrads 30 ausgerichteten Ebene gelegen ist. Diese Ebene ist in einer Verschlussstellung des Strömungsleitelements 52 (vgl. Fig. 3 und 5) in einem möglichst kleinen Abstand zu der Eintrittsebene 38 des Verdichterlaufrads 26 angeordnet, wobei ein sehr geringer jedoch ausreichender Abstand vorgesehen sein kann, um trotz möglicher Form- und Lagetoleranzen der relevanten Bauteile sowie trotz der für den Betrieb des Verdichters 26 zu erwartenden thermisch bedingten Dehnungen stets einen Kontakt des laufradseitigen Endes des Strömungsleitelements 52 mit den Eintrittskanten des Verdichterlaufrads 26 zu vermeiden.

Das Strömungsleitelement 52 umfasst einen vollumfänglich geschlossen ausgebildeten Anfangsabschnitt 60 und einen ebenfalls vollumfänglich geschlossen ausgebildeten Endabschnitt 62, die mittels einer Mehrzahl von parallel zu der Längsachse 58 verlaufenden Verbindungsstreben 64 beabstandet zueinander miteinander verbunden sind. Der Anfangsabschnitt 60, der Endabschnitt 62 sowie die Verbindungsstreben 64 begrenzen dabei mehrere Überströmöffnungen 66, die ein Überströmen von Frischgas und/oder rückgeführtem Abgas von dem peripheren Strömungsbereich 56 in den zentralen Strömungsbereich 54 ermöglichen.

Das Strömungsleitelement 52 ist mittels eines u.a. als Befestigungselement dienenden, radial ausgerichteten und ringscheibenförmigen Stützelements 68 zentral innerhalb des Einlasskanals 40 positioniert gehalten. Dieses Stützelement 68 ist Teil einer Verschlussvorrichtung 84, mittels der der periphere Strömungsbereich 56 in einem stromauf einer Mündung 72 einer (Niederdruck-)Abgasrückführung 70 gelegenen Abschnitt verschließbar ist. In dem Stützelement 68 ist der Anfangsabschnitt 60 des Strömungsleitelements 52 längsaxial verschiebbar gelagert. Außenseitig liegt das Stützelement 68 vollumfänglich an einem Abschnitt der den Einlasskanal 40 begrenzenden Wandung des Gehäuses 36 an. Eine Fixierung der Einheit aus Strömungsleitelement 52 und Verschlussvorrichtung 84 erfolgt mittels einer Mehrzahl von parallel zu der Längsachse 58 des Strömungsleitelements 52 verlaufenden Zugankern (nicht dargestellt), deren Köpfe an dem Stützelement 68 abgestützt sind und die in entsprechende Gewindebohrungen 78 in einem dem Verdichterlaufrad 30 nahe gelegenen Abschnitt des Gehäuses 36 eingeschraubt sind. Als Widerlager für die auf Zug erfolgende Belastung des Stützelements 64 mittels der Zuganker 66 wirkt ein umlaufender Absatz 80 innerhalb der den Einlasskanal 40 begrenzenden Wandung des Gehäuses 36. In dem Stützelement 68 sind eine Mehrzahl von Durchgangsöffnungen 82 vorgesehen, die ein Überströmen von Frischgas aus dem stromauf (bezogen auf die durch die Pfeile in den Fig. 3, 5, und 7 angedeutete Durchströmungsrichtung des Verdichters 22) gelegenen Abschnitt des Einlasskanals 40 in den peripheren Strömungsbereich 56 ermöglichen.

Die Verschlussvorrichtung 84 umfasst weiterhin noch eine ringscheibenförmige Verschlussblende 86. Die Durchgangsöffnungen 82 in dem Stützelement 68 können mittels der Verschlussblende 86, die ebenfalls Durchgangsöffnungen 90 aufweist, verschlossen oder freigegeben werden, indem die Verschlussblende 86 relativ zu dem Stützelement 68 verdreht wird, wodurch die Durchgangsöffnungen 82, 90 in dem Stützelement 68 sowie in der Verschlussblende 86 entweder vollständig (vgl. insbesondere Fig. 4 und 6), teilweise oder nicht (vgl. insbesondere Fig. 2) in Überdeckung gebracht werden. Ein Verdrehen der Verschlussblende 86 kann mittels eines Aktors (nicht dargestellt) erfolgen, der hierzu an einem Verstellhebel 88 der Verschlussblende 86 angreifen kann. Der Aktor kann dabei von einer Steuerungsvorrichtung 14 einer Brennkraftmaschine gemäß der Fig. 1 angesteuert werden.

Da insbesondere die geschlossenen Abschnitte des Stützelements 68 und der Verschlussblende 86 einen nicht unerheblichen Strömungswiderstand für die Frischgasströmung darstellen ist vorgesehen, dass der Einlasskanal 40 bis kurz vor der Eintrittsebene 38 des Verdichterlaufrads 30 einen Durchmesser aufweist, der deutlich größer als der Durchmesser der Eintrittsfläche des Verdichterlaufrads 30 beziehungsweise des Eintrittsquerschnitts des Strömungsraums ist. Diese relativ große Dimensionierung des Einlasskanals 40 kann dazu beitragen, Strömungsverluste, die durch insbesondere die Verschlussvorrichtung 84 erzeugt werden, zumindest teilweise zu kompensieren. In einem vergleichsweise kurzen Abschnitt des Einlasskanals 40 direkt stromauf der Eintrittsebene 38 verjüngt sich der Einlasskanal 40, indem sich der Außendurchmesser des peripheren Strömungsbereichs 56 kontinuierlich verkleinert. Um den Strömungswiderstand durch die Verschlussvorrichtung 84 möglichst gering zu halten ist vorgesehen, zumindest die geschlossenen Abschnitte der Verschlussblende 86 strömungstechnisch vorteilhaft, beispielsweise abgerundet auszubilden.

Die Fig. 2 und 3 zeigen das Strömungsleitelement 52 in einer Verschlussstellung, in der durch einen Kontakt des Endabschnitts 62 des Strömungsleitelements 52 mit der den Einlasskanal 40 begrenzenden Wandung des Gehäuses 36 der periphere Strömungsbereich 56 im Bereich der Eintrittsebene 38 des Verdichterlaufrads 30 möglichst vollständig verschlossen ist. Gleichzeitig befindet sich die Verschlussblende 86 der Verschlussvorrichtung 84 in einer Verschlussstellung, wodurch verhindert wird, das Frischgas durch die Durchtrittsöffnungen 82, 90 des Stützelements 68 und der Verschlussblende 86 in den peripheren Strömungsbereich 56 einströmen kann. Dieser Funktionszustand des Verdichters 22 ist bei einem Betrieb eines mit dem Verdichter 22 zusammenwirkenden Verbrennungsmotors 10 einer Brennkraftmaschine mit relativ niedrigen Drehzahlen von beispielsweise ≤ 2000 1/Min und Lasten, die geringer als Volllast sind, vorgesehen. Das Frischgas wird dann folglich ausschließlich über den zentralen Strömungsbereich 54 dem Verdichterlaufrad 30 zugeführt und gleichzeitig mittels des Endabschnitts 62 des Strömungsleitelements 52 eine randseitige Abdeckung des Eintrittsquerschnitts des Strömungsraums und damit auch der Eintrittsfläche des Verdichterlaufrads 30 erreicht. Dadurch kann die Ausbildung einer Rückströmblase in dem Einlasskanal 40 vermieden und eine Fokussierung der Frischgasströmung auf einen nabennahen Abschnitt des Verdichterlaufrads 30 erreicht werden, was sich positiv auf den Betrieb des Verdichters 22 in einem solchen Betriebszustand der Brennkraftmaschine auswirkt. Für eine möglichst wirkungsvolle Verhinderung der Ausbildung einer Rückströmblase ist vorgesehen, dass der Strömungsquerschnitt des zentralen Strömungsbereichs 54 an dem laufradseitigen Ende des Strömungsleitelements 52, der dem kleinsten von dem Endabschnitt 62 definierten Strömungsquerschnitt A_{Emin} entspricht, zwischen 60% und 70%, vorzugsweise zwischen 65% und 70%, der Eintrittsfläche des Verdichterlaufrads 30 entspricht.

Durch das Anströmen des Verdichterlaufrads 30 mittels des Frischgases ausschließlich über den zentralen Strömungsbereich 54 kann weiterhin die Ausbildung eines relativ ausgeprägten Unterdrucks in dem peripheren Strömungsbereich 56 realisiert werden, wodurch trotz der relativ geringen Drehzahlen in dem dazugehörigen Betriebszustand der Brennkraftmaschine ein ausreichend großes Druckgefälle über der Abgasrückführung 70 realisiert werden kann, um stets ein Rückführen von Abgas in ausreichender Höhe zu ermöglichen. Tatsächlich gesteuert werden kann die Menge des rückzuführenden Abgases dabei mittels eines in die Abgasrückführung 70 integrierten Regelventils 76 (vgl. Fig. 1). Unterstützt wird die Ausbildung eines Unterdrucks in dem peripheren Strömungsbereich 56 noch dadurch, dass der kleinste Strömungsquerschnitt A_{Amin} des zentralen Strömungsbereichs 54 innerhalb des Anfangsabschnitts 60 kleiner als der kleinste Strömungsquerschnitt A_{Emin} des zentralen Strömungsbereichs 54 innerhalb des Endabschnitts 62 des Strömungsleitelements 52 ausgebildet ist. Konkret kann vorgesehen sein, dass dieser kleinste Strömungsquerschnitt A_{Amin} innerhalb des Anfangsabschnitts 60, der von der direkt an die Überströmöffnungen angrenzenden Kante des Anfangsabschnitts 60 ausgebildet ist, nur ca. 50% der Eintrittsfläche des Verdichterlaufrads 30 entspricht.

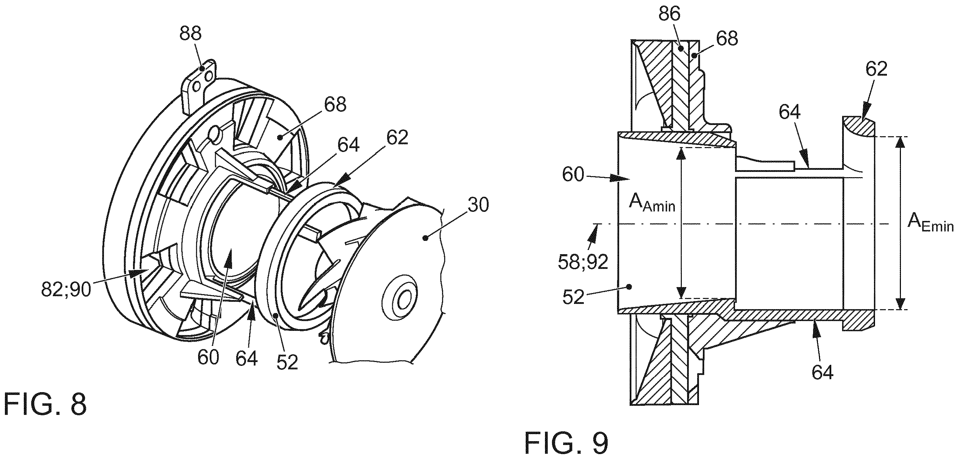

Um eine möglichst vorteilhafte Durchströmung des zentralen Strömungsbereichs 54 innerhalb des Anfangsabschnitts 60 des Strömungsleitelements 52 zu erreichen ist vorgesehen, dass sich der Strömungsquerschnitt innerhalb dieses Anfangsabschnitts 60 in der zu dem Verdichterlaufrad 30 weisenden Richtung kontinuierlich verkleinert (vgl. insbesondere Fig. 9). Gleiches gilt für den Endabschnitt 62 des Strömungsleitelements 52, der ebenfalls in einem distal bezüglich des Verdichterlaufrads 30 gelegenen Anfangsbereich sich verjüngend ausgebildet ist.

Die Fig. 4 und 5 zeigen das Strömungsleitelement 52 wiederum in der Verschlussstellung. Anders als bei dem Funktionszustand gemäß den Fig. 2 und 3 befindet sich die Verschlussblende 86 der Verschlussvorrichtung 84 dann jedoch in einer Öffnungsstellung, so dass Frischgas durch die Durchgangsöffnungen 82, 90 des Stützelements 68 und der Verschlussblende 86 in den peripheren Strömungsbereich 56 einströmen kann. Dieser Funktionszustand des Verdichters 22 ist ebenfalls bei einem Betrieb eines mit dem Verdichter 22 zusammenwirkenden Verbrennungsmotors 10 einer Brennkraftmaschine mit relativ niedrigen Drehzahlen von beispielsweise ≤ 2000 1/Min, gleichzeitig jedoch bei Volllast vorgesehen. Das Frischgas wird folglich nicht nur über den zentralen Strömungsbereich 54 sondern auch über den peripheren Strömungsbereich 56 dem Verdichterlaufrad 30 zugeführt. Infolge der Positionierung des Strömungsleitelements 52 in der Verschlussstellung wird dabei jedoch das gesamte Frischgas wiederum auf einen nabennahen Abschnitt des Verdichterlaufrads 30 fokussiert, da der periphere Strömungsbereich 56 im Bereich der Eintrittsebene 38 des Verdichterlaufrads 30 infolge der Verschlussstellung des Strömungsleitelements 52 verschlossen ist. Die Teilströmung des Frischgases, die in den peripheren Strömungsbereich 56 eingeströmt ist, strömt daher noch vor dem Erreichen der Eintrittsebene 38 durch die Überströmöffnungen 66 in den zentralen Strömungsbereich 58 über. Da auch in diesem Funktionszustand des Verdichters 22 gemäß den Fig. 4 und 5 eine randseitige Abdeckung des Eintrittsquerschnitts des Strömungsraums sowie der Eintrittsfläche des Verdichterlaufrads 30 gegeben ist, kann wiederum beziehungsweise weiterhin die Ausbildung einer Rückströmblase in dem Einlasskanal 40 vermieden werden. In diesem Funktionszustand des Verdichters 22 kann insbesondere ein relativ guter Verdichterwirkungsgrad erreicht werden. Dies kann sich insbesondere positiv hinsichtlich des Ansprechverhaltens des Verdichters 22 und damit der Brennkraftmaschine insgesamt auszeichnen. Die Leistungsentwicklung der Brennkraftmaschine nach einem Lastsprung, der durch einen plötzlichen Volllastbetrieb bei relativ niedrigen Drehzahlen gekennzeichnet ist, kann dadurch positiv beeinflusst werden.

In dem Funktionszustand des Verdichters 22 gemäß den Fig. 4 und 5 wird aufgrund der Durchströmung des peripheren Strömungsbereichs 56 nur ein relativ geringer Unterdruck im Bereich der Mündung 72 der Abgasrückführung 70 erzeugt. Da jedoch für den entsprechenden Betriebszustand der Brennkraftmaschine in der Regel keine oder nur eine sehr geringe Rückführung von Abgas vorgesehen ist, ist dies unproblematisch.

Die Fig. 6 und 7 zeigen einen Funktionszustand des Verdichters 22, bei dem sich sowohl das Strömungsleitelement 52 als auch die Verschlussvorrichtung 84 in einer Öffnungsstellung befinden. Dadurch kann Frischgas sowohl über den zentralen Strömungsbereich 54 als auch über den peripheren Strömungsbereich 56 dem Verdichterlaufrad 30 zu- und zudem über die gesamten Eintrittsfläche in das Verdichterlaufrad 30 einströmen. Dieser Funktionszustand des Verdichters 22 ist bei einem Betrieb eines mit dem Verdichter 22 zusammenwirkenden Verbrennungsmotors 10 einer Brennkraftmaschine mit relativ hohen Drehzahlen von beispielsweise > 2000 1/Min (unabhängig von der Last) vorgesehen. Primäres Ziel dieses Funktionszustands des Verdichters 22 ist eine möglichst widerstandsarme Anströmung des Verdichterlaufrads 30, was sich positiv auf den Verdichterwirkungsgrad sowie auf die Lage der Stopfgrenze in dem dazugehörigen Verdichterkennfeld auswirken kann.

Auch in diesem Funktionszustand wird aufgrund der Durchströmung des peripheren Strömungsbereichs 56 kein relevanter Unterdruck in dem Bereich der Mündung 72 der Abgasrückführung 70 erzeugt. In dem dazugehörigen Betriebszustand der Brennkraftmaschine (relativ hohe Drehzahlen) ergibt sich jedoch infolge eines entsprechend hohen Drucks im Abgasstrang auch ohne eine solche strömungsbedingte Erzeugung eines Unterdrucks im Einlasskanal 40 des Verdichters 22 ein ausreichendes Druckgefälle über der Abgasrückführung 70, um stets die Rückführung einer ausreichend großen Menge von Abgas zu gewährleisten. Die tatsächliche Menge des rückzuführenden Abgases wird dabei betriebspunktabhängig mittels des in die Abgasrückführung 70 integrierten Regelventils 76 gesteuert oder geregelt. Eine Verschiebung des Strömungsleitelements 52 erfolgt mittels einer mechanischen Kopplung (nicht dargestellt) an die Verschlussblende 86, so dass durch die Verwendung desselben Aktors sowohl das Verdrehen der Verschlussblende 86 als auch das Verschieben des Strömungsleitelements 52 bewirkt werden kann. Diese mechanische Kopplung kann auf einem Zapfen der Verschlussblende 86 beruhen, der in eine Längsvertiefung, die in der Außenseite des Anfangsabschnitts 60 des Strömungsleitelements 52 eingebracht ist, eingreift, wobei diese Längsvertiefung einen Abschnitt, der parallel zu der Längsachse 58 des Strömungsleitelements 52 ausgerichtet ist, sowie einen weiteren Abschnitt, der spiralförmig verläuft und damit in jedem Punkt schräg bezüglich der Längsachse 58 ausgerichtet ist, aufweist. Dadurch kann erreicht werden, dass das Strömungsleitelement 52 in einem Abschnitt einer Drehung der Verschlussblende 86 ausschließlich mitgedreht jedoch nicht verschoben wird (für eine Verstellung zwischen den in den Fig. 2 und 3 einerseits und den Fig. 4 und 5 andererseits dargestellten Funktionsstellungen) und in einem weiteren Abschnitt der Drehung der Verschlussblende 86 zusätzlich verschoben wird (je nach Ausgestaltung des Verdichters 22 für eine Verstellung zwischen den in den Fig. 2 und 3 einerseits und den Fig. 6 und 7 andererseits dargestellten Funktionsstellungen oder für eine Verstellung zwischen den in den Fig. 4 und 5 einerseits und den Fig. 6 und 7 dargestellten Funktionsstellungen).

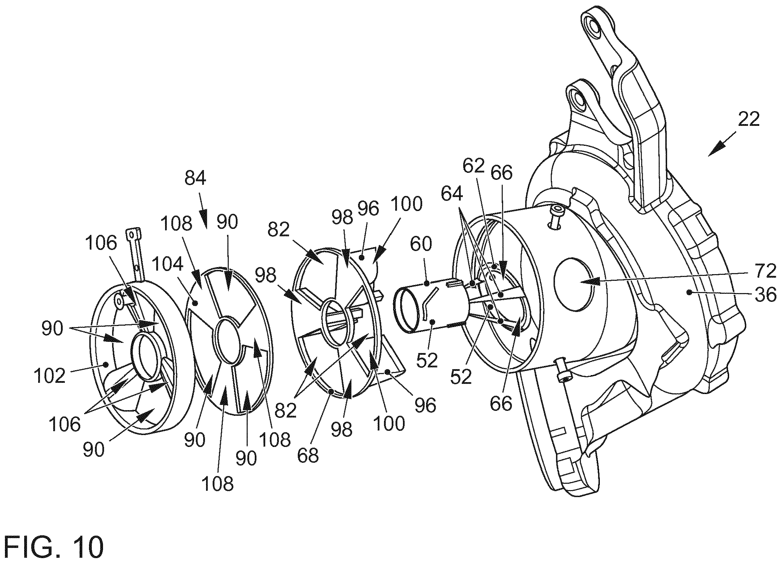

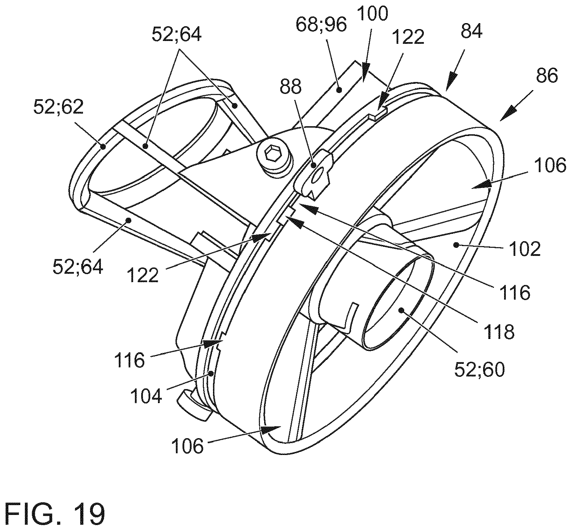

Die Fig. 10 bis 21 zeigen in verschiedenen Ansichten eine zweite Ausgestaltungsform eines erfindungsgemäßen (Radial-)Verdichters 22, wie er beispielsweise als Teil des Abgasturboladers in einer Brennkraftmaschine gemäß der Fig. 1 zum Einsatz kommen kann. Im Folgenden sollen lediglich die hauptsächlichen Unterschiede dieses Verdichters 22 gegenüber demjenigen der Fig. 2 bis 9 beschrieben werden.

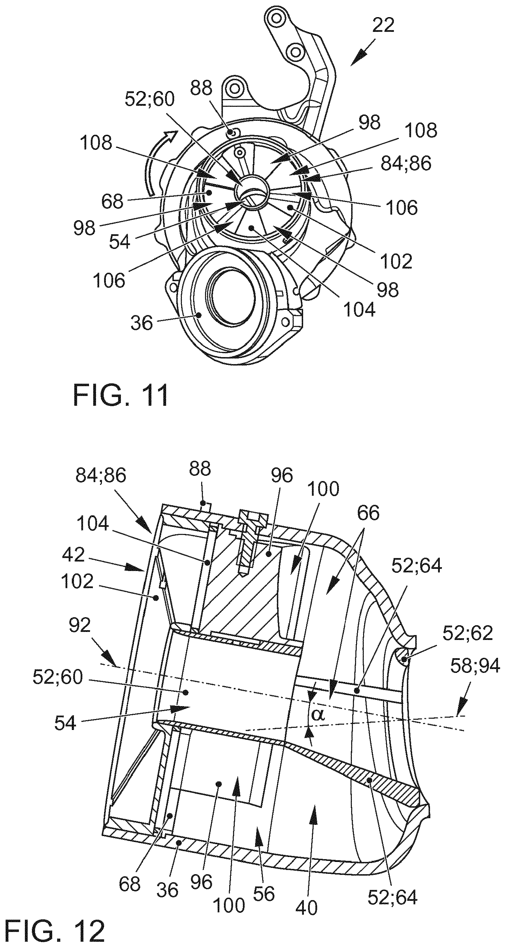

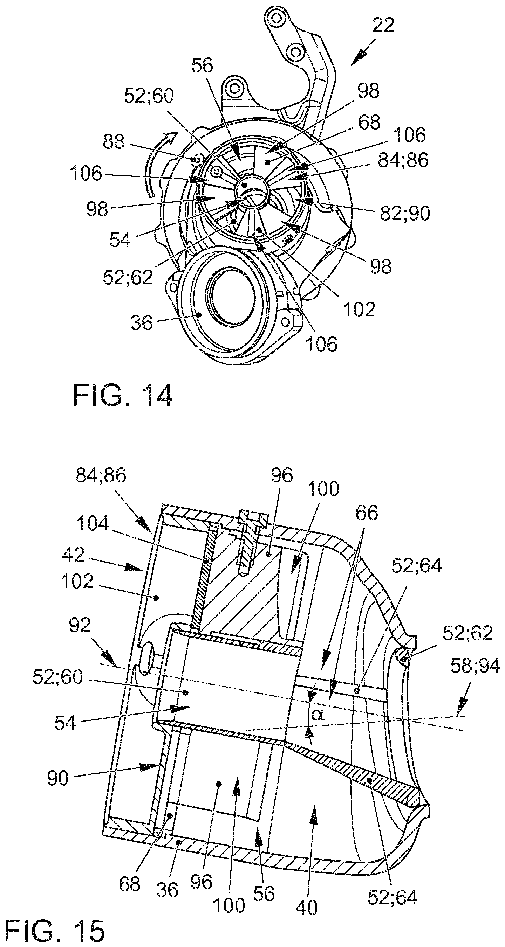

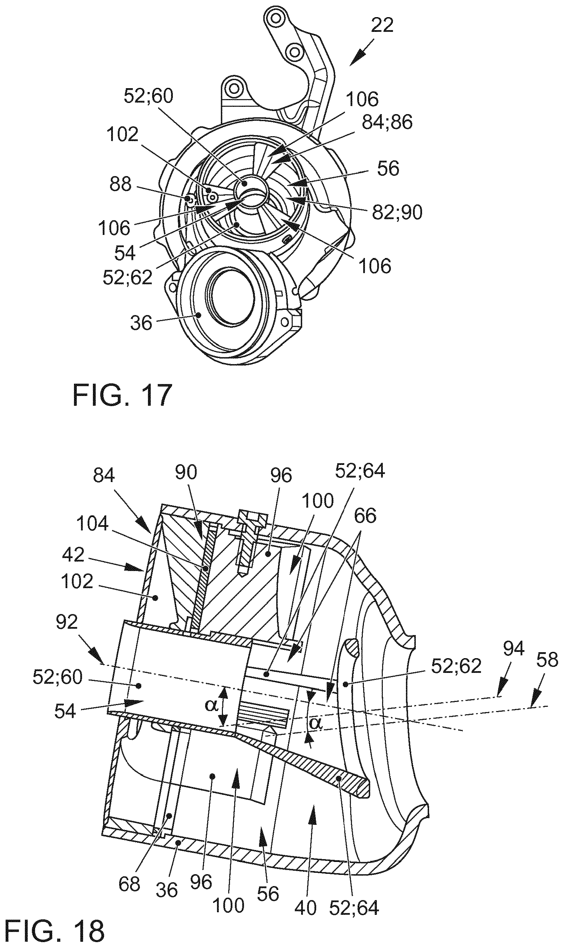

Der Verdichter 22 gemäß den Fig. 10 bis 21 unterscheidet sich von demjenigen gemäß den Fig. 2 bis 9 zum einen darin, dass die Längsachse 92 des Einlasskanals 40 nicht koaxial oder parallel sondern schräg (unter einem Winkel α; vgl. Fig. 12, 15 und 18) bezüglich der Rotationsachse 58 des Verdichterlaufrads 30 verläuft. Dies gilt dann auch für die Längsachse des Anfangsabschnitt 60 des Strömungsleitelements 52, wohingegen die Längsachse 94 des ringförmigen Endabschnitts 62 des Strömungsleitelements 52, je nach Verschiebestellung des Strömungsleitelements 52, entweder parallel (vgl. Fig. 18) oder koaxial (vgl. Fig. 12 und 15) bezüglich der Rotationsachse 58 des Verdichterlaufrads 30 verläuft, damit die hintere Kante des Endabschnitts 62 in der Verschlussstellung des Strömungsleitelements 52 (vgl. Fig. 12 und 15) die Eintrittsfläche des Verdichterlaufrads 30 vollumfänglich in einem möglichst geringen Abstand zu der Eintrittsebene 38 randseitig überdeckt.

Der Verdichter 22 gemäß den Fig. 10 bis 21 unterscheidet sich von demjenigen gemäß den Fig. 2 bis 9 weiterhin darin, dass das Stützelement 68 eine Leitvorrichtung ausbildet, die zur Erzeugung eines Dralls für eine Frischgasströmung, die bei geöffneter Verschlussvorrichtung 84 in den peripheren Strömungsbereich 56 einströmen würde, vorgesehen ist. Dabei ist diese Leitvorrichtung derart ausgebildet, dass diese einen Drall bewirkt, dessen Drehbeziehungsweise Drallrichtung der für das Verdichterlaufrad 30 vorgesehenen Drehrichtung entgegengesetzt ist. Die Leitvorrichtung umfasst mehrere identisch und als Volumenkörper ausgebildete Leitelemente 96, die sich von den stromab bezüglich der Strömungsrichtung des Frischgases gelegenen Rückseiten von Verschlussabschnitten 98 des Stützelements 68 erstrecken. Diese Leitelemente 96 bilden jeweils zwei Leitflächen 100 aus, von denen jeweils eine im Wesentlichen parallel beziehungsweise radial zu der Längsachse 92 des Einlasskanals ausgerichtet ist, während die jeweilige andere Leitfläche 100 (in Richtung des gewünschten Dralls der Frischgasströmung) schräg bezüglich der Längsachse 92 des Einlasskanals 40 verläuft.

Ein weiterer Unterschied des Verdichters 22 gemäß den Fig. 10 bis 21 zu demjenigen gemäß den Fig. 2 bis 9 liegt in der Ausgestaltung der Verschlussblende 86 der Verschlussvorrichtung 84. Die Verschlussblende 86 des Verdichters 22 gemäß den Fig. 10 bis 21 umfasst eine erste Teilblende 102 sowie eine zweite Teilblende 104, die zwischen der ersten Teilblende 102 und dem Stützelement 68 angeordnet ist. Dabei ist diese sowohl bezüglich des Stützelements 68 als auch bezüglich der ersten Teilblende 102 in Grenzen drehbar (um die Rotationsachse 92 der Verschlussblende 86) gelagert.

Sowohl das Stützelement 68 als auch die erste Teilblende 102 und die zweite Teilblende 104 bilden jeweils in abwechselnder Anordnung und konstanter Teilung mehrere (konkret drei) Durchgangsöffnungen 82, 90 sowie Verschlussabschnitte 98, 106, 108 auf, wobei sowohl die Durchgangsöffnungen 82, 90 als auch die Verschlussabschnitte 98, 106, 108 hinsichtlich der senkrecht bezüglich der Rotationsachse 92 ausgerichteten Öffnungs- oder Verschlussflächen identisch (sowohl hinsichtlich der Flächenform als auch der Flächengröße) ausgebildet sind. Dabei ist die Flächengröße der Verschlussflächen der Verschlussabschnitte 98, 106, 108 ungefähr halb so groß wie die der Öffnungsflächen der Durchgangsöffnungen 82, 90.

Diese Ausgestaltung der Verschlussvorrichtung 84 ermöglicht, in der vollständig geöffneten Stellung der Verschlussvorrichtung 84 gemäß den Fig. 17 bis 19 (in der gleichzeitig auch das Strömungsleitelement 52 in einer Öffnungsstellung positioniert ist) einen Strömungsquerschnitt, über den Frischgas in den peripheren Strömungsbereich 56 einströmen kann, freizugeben, der in etwa doppelt so groß wie der von der Verschlussvorrichtung 84 gleichzeitig versperrte Querschnitt ist.

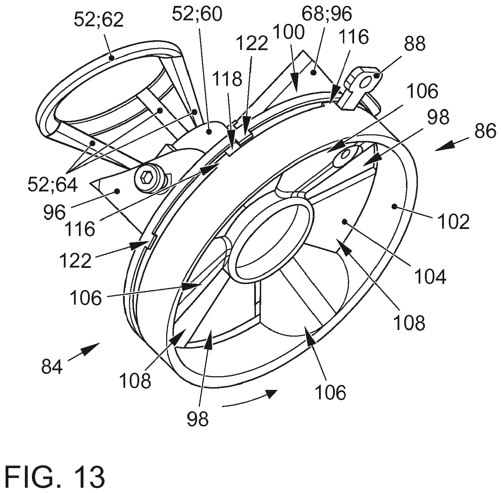

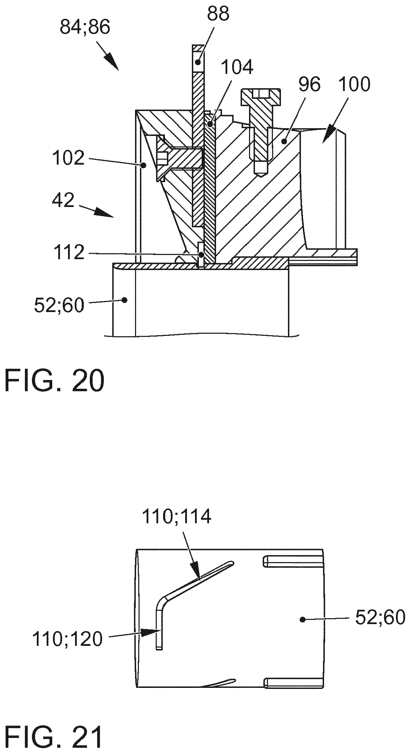

Bei einem Verstellen der Verschlussvorrichtung 84 von der Stellung gemäß den Fig. 17 bis 19 (die zu einer Funktionsstellung des Verdichters 22 gehört, die der Funktionsstellung des Verdichters 22 gemäß den Fig. 6 und 7 entspricht) in die Stellung gemäß den Fig. 14 und 15 (die zu einer Funktionsstellung des Verdichters 22 gehört, die der Funktionsstellung des Verdichters 22 gemäß den Fig. 4 und 5 entspricht) wird mittels eines Aktors (nicht dargestellt), der auf einen Verstellhebel 88 der Verschlussblende 86 wirkt (vgl. Fig. 13, 16 und 19), lediglich die erste Teilblende 102 um einen Winkel von ca. 40°, der der Umfangsbreite der Verschlussabschnitte 98, 106, 108 entspricht, gegenüber sowohl der zweiten Teilblende 104 als auch dem Stützelement 68 verdreht, wodurch die von dem Stützelement 68 ausgebildeten Durchgangsöffnungen 82 zur Hälfte verschlossen beziehungsweise von den Verschlussabschnitten 106 der ersten Teilblende 102 überdeckt werden. Dabei wird gleichzeitig das Strömungsleitelement 52 von der Öffnungsstellung in eine Schließstellung bewegt. Dies ist auf die Wirkung eines in einer Führungsnut 110, die auf der Außenseite des Strömungsleitelements 52 ausgebildet ist, geführten Zapfens 112, der mit der ersten Teilblende 102 verbunden ist, zurückzuführen (vgl. Fig. 21). Der Zapfen 112 bewegt sich dabei drehbar in einem ersten, spiralförmig verlaufenden Abschnitt 114 der Führungsnut 110, so dass die Drehbewegung der ersten Teilblende 102 und damit die teilkreisförmige Bewegung des Zapfens 112 um die Rotationsachse 92 zu einem axialen Verschieben des drehfest und gleichzeitig axial verschiebbar innerhalb des Stützelements 68 gelagerten Strömungsleitelements 52 führt.

Erfolgt ein weitergehendes Verdrehen der ersten Teilblende 102 mittels des Aktors von der Stellung gemäß den Fig. 14 und 15 in die Stellung gemäß den Fig. 11 bis 13 (die zu einer Funktionsstellung des Verdichters 22 gehört, die der Funktionsstellung des Verdichters 22 gemäß den Fig. 2 und 3 entspricht), wird die zweite Teilblende 104 von der ersten Teilblende 102 mitgenommen. Dies wird mittels entsprechend positionierten Anschlagelementen 116, 118 der ersten Teilblende 102 und der zweiten Teilblende 104 realisiert, die dann miteinander kontaktieren und so eine Drehbewegung der zweiten Teilblende 104 an die Drehbewegung der ersten Teilblende 102 koppeln. In der Stellung gemäß den Fig. 11 bis 13 ist die Verschlussvorrichtung 84 vollständig geschlossen, wohingegen sich die Position des Strömungsleitelements 52 beim Verstellen von der Stellung gemäß den Fig. 14 und 15 in die Stellung gemäß den Fig. 11 bis zu 13 nicht ändert. Dies wird dadurch erreicht, dass sich der Zapfen 112 der ersten Teilblende 102 bei dieser Verstellung bereits in einem zweiten Abschnitt 120 der Führungsnut 110 befindet, in dem die Längsachse der Führungsnut 110 in einer senkrecht zu der Rotationsachse 92 gelegenen Ebene verläuft (vgl. Fig. 21).

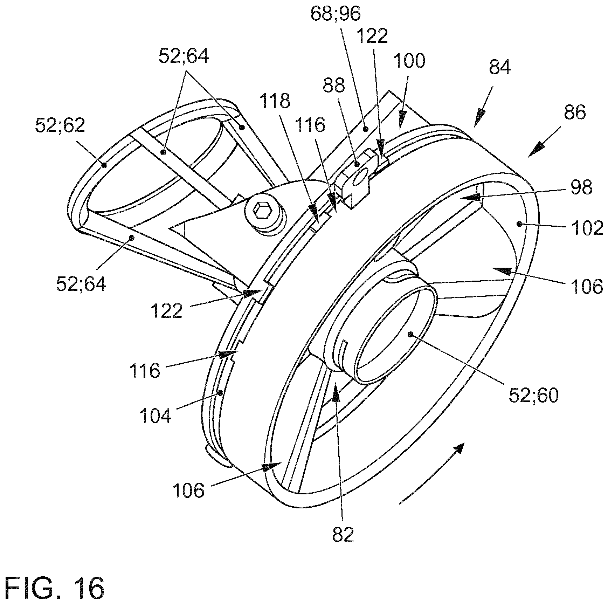

Bei einem Verstellen der Verschlussvorrichtung 84 von der vollständig geschlossenen Stellung gemäß den Fig. 11 bis 13 bis in die vollständig geöffnete Stellung gemäß den Fig. 17 bis 19 erfolgt in entsprechender Weise ebenfalls zunächst eine Drehung ausschließlich der ersten Teilblende 102, bis in die Stellung gemäß den Fig. 14 und 15. Ab dieser Stellung wird die zweite Teilblende 104 durch ein Anschlagen der entsprechenden Anschlagelemente 116, 118 von der ersten Teilblende 102 mitgenommen und über die Stellung gemäß der Fig. 16, in der die zweite Teilblende 104 bereits ein Stück weit von der ersten Teilblende 102 mitgenommen worden ist, bis in die Stellung gemäß den Fig. 17 bis 19 bewegt. In der Stellung gemäß den Fig. 17 bis 19 wirkt dasjenige Anschlagelement 118 der zweiten Teilblende 104, das für diese Verstellung mit einem der Anschlagelemente 116 der ersten Teilblende 102 kontaktiert, auch mit einem einen Endanschlag ausbildenden Anschlagelement 122 des Stützelements 68 zusammen, wodurch ein weitergehendes Verdrehen der Verschlussblende 86 in dieser Drehrichtung verhindert ist. Ein entsprechender Endanschlag für ein Verdrehen in der entgegengesetzten Richtung wird durch ein weiteres Anschlagelement 122 des Stützelements 68 bereitgestellt.

### Bezugszeichenliste

- 10: Verbrennungsmotor
- 12: Zylinder
- 14: Steuerungsvorrichtung
- 16: Injektor
- 18: Ansaugmündung
- 20: Luftfilter
- 22: Verdichter
- 24: Ladeluftkühler
- 26: Turbine
- 28: Welle
- 30: Verdichterlaufrad
- 32: Vorrichtung zur variablen Turbinenanströmung
- 34: Regelklappe
- 36: Gehäuse des Verdichters
- 38: Eintrittsebene des Verdichterlaufrads
- 40: Einlasskanal
- 42: Verdichtereinlass
- 44: Laufradschaufel
- 46: Diffusorraum
- 48: Verdichtervolute
- 50: Verdichterauslass
- 52: Strömungsleitelement
- 54: zentraler Strömungsbereich
- 56: peripherer Strömungsbereich
- 58: Rotationsachse des Verdichterlaufrads
- 60: Anfangsabschnitt des Strömungsleitelements
- 62: Endabschnitt des Strömungsleitelements
- 64: Verbindungsstrebe des Strömungsleitelements
- 66: Überströmöffnung des Strömungsleitelements
- 68: Stützelement
- 70: (Niederdruck-)Abgasrückführung
- 72: Mündung der (Niederdruck-)Abgasrückführung
- 74: Abgasnachbehandlungsvorrichtung
- 76: Regelventil
- 78: Gewindebohrung
- 80: Absatz
- 82: Durchgangsöffnung des Stützelements
- 84: Verschlussvorrichtung
- 86: Verschlussblende
- 88: Verstellhebel der Verschlussblende
- 90: Durchgangsöffnung der Verschlussblende
- 92: Längsachse des Einlasskanals / Längsachse (des Anfangsabschnitts) des Strömungsleitelements / Rotationsachse der Verschlussblende
- 94: Längsachse des Endabschnitts des Strömungsleitelements
- 96: Leitelement
- 98: Verschlussabschnitt des Stützelements
- 100: Leitfläche eines Leitelements
- 102: erste Teilblende
- 104: zweite Teilblende
- 106: Verschlussabschnitt der ersten Teilblende
- 108: Verschlussabschnitt der zweiten Teilblende
- 110: Führungsnut des Strömungsleitelements
- 112: Zapfen der ersten Teilblende
- 114: erster Abschnitt der Führungsnut
- 116: Anschlagelement der ersten Teilblende
- 118: Anschlagelement der zweiten Teilblende
- 120: zweiter Abschnitt der Führungsnut
- 122: Anschlagelement des Stützelements

- A_{Emin}: kleinster von dem Endabschnitt des Strömungsleitelements definierter Strömungsquerschnitt
- A_{Amin}: kleinster von dem Anfangsabschnitt des Strömungsleitelements definierter Strömungsquerschnitt

## Patentansprüche

1. Verdichter (22) mit einem Gehäuse (36), das einen Strömungsraum, innerhalb dessen ein Verdichterlaufrad (30) drehbar gelagert ist, und einen Einlasskanal (40), der einen Verdichtereinlass (42) mit dem Strömungsraum verbindet, ausbildet, wobei in dem Einlasskanal (40) ein rohrförmiges Strömungsleitelement (52) angeordnet ist, durch das zumindest ein Abschnitt des Einlasskanals (40) in einen zentralen Strömungsbereich (54) und einen peripheren Strömungsbereich (56) unterteilt ist, die beide in dem Bereich einer Eintrittsebene (38) des Verdichterlaufrads (30) in den Strömungsraum übergehen, wobei in den peripheren Strömungsbereich (56) eine Abgasrückführung (70) mündet und der periphere Strömungsbereich (56) in einem stromauf einer Mündung (72) der Abgasrückführung (70) gelegenen Abschnitt mittels einer Verschlussvorrichtung (84) verschließbar ausgebildet ist, wobei das Strömungsleitelement (52) in einem längsaxial mittig gelegenen Abschnitt mindestens eine Überströmöffnung (66) aufweist, **dadurch gekennzeichnet,**
**dass** zumindest ein dem Verdichterlaufrad (30) benachbarter Endabschnitt (62) des Strömungsleitelements (52) längsaxial verschiebbar ausgebildet ist, wobei der periphere Strömungsbereich (56) in dem Bereich der Eintrittsebene (38) in einer Verschlussstellung durch diesen Endabschnitt (62) verschlossen ist und in einer Öffnungsstellung freigegeben ist, und
**dass** die Verschlussvorrichtung (84) ein Stützelement (68), das eine oder mehrere Durchgangsöffnungen (82) und einen oder mehrere Verschlussabschnitte (98) ausbildet, sowie eine Verschlussblende (86), die ebenfalls eine oder mehrere Durchgangsöffnungen (90) und einen oder mehrere Verschlussabschnitte (106, 108) aufweist, umfasst, wobei die Verschlussblende (86) relativ zu dem Stützelement (68) um eine Rotationsachse (92) drehbar ist und wobei die Verschlussblende (86) mindestens zwei Teilblenden (102, 104) umfasst, die relativ zueinander um die Rotationsachse (92) drehbar und axial hintereinander angeordnet sind.

2. Verdichter (22) gemäß Anspruch 1, **dadurch gekennzeichnet, dass** das Strömungsleitelement (52) durch die Überströmöffnung (66) in einen Anfangsabschnitt (60) und den Endabschnitt (62) unterteilt ist, wobei sich der Strömungsquerschnitt des zentralen Strömungsbereichs (54) in dem Anfangsabschnitt (60) und/oder in dem Endabschnitt (62) in der zu dem Verdichterlaufrad (30) weisenden Richtung verkleinert.

3. Verdichter (22) gemäß Anspruch 2, **dadurch gekennzeichnet, dass** der kleinste Strömungsquerschnitt des zentralen Strömungsbereichs (54) innerhalb des Anfangsabschnitts (60) kleiner oder gleich groß im Vergleich zu dem kleinsten Strömungsquerschnitt des zentralen Strömungsbereichs (54) innerhalb des Endabschnitts (62) ist.

4. Verdichter (22) gemäß einem der vorhergehenden Ansprüche, **gekennzeichnet durch** eine Koppelung zwischen dem Strömungsleitelement (52) und der Verschlussvorrichtung (84) derart, dass eine Schließbewegung der Verschlussvorrichtung (84) zu einer Verschiebung zumindest des Endabschnitts (62) des Strömungsleitelements (52) führt.

5. Verdichter (22) gemäß Anspruch 4, **dadurch gekennzeichnet, dass** die Schließbewegung der Verschlussvorrichtung (84) in einen ersten Abschnitt und einen zweiten Abschnitt unterteilt ist, wobei eine Bewegung innerhalb des ersten Abschnitts ausschließlich ein Verändern der Schließstellung der Verschlussvorrichtung (84) bewirkt, während die Schließbewegung in dem zweiten Abschnitt ausschließlich oder zusätzlich ein Verschieben zumindest des Endabschnitts (62) des Strömungsleitelements (52) bewirkt.

6. Verdichter (22) gemäß einem der vorhergehenden Ansprüche, **dadurch gekennzeichnet, dass** die Teilblenden (102, 104) jeweils einen oder mehrere Verschlussabschnitte (106, 108) ausbilden, wobei die Umfangsbreiten der einzelnen Verschlussabschnitte (106, 108) der Teilblenden (102, 104) jeweils kleiner als die Umfangsbreite(n) des/der Durchgangsöffnung(en) (82) des Stützelements (68) sind und die Summe der Umfangsbreiten von jeweils einem Verschlussabschnitt (106, 108) der Teilblenden (102, 104) gleichgroß oder größer als die Umfangsbreite(n) des/der Durchgangsöffnung(en) (82) des Stützelements (68) ist.

7. Verdichter (22) gemäß Anspruch 6, **dadurch gekennzeichnet, dass** die Umfangsbreiten der einzelnen Verschlussabschnitte (98, 106, 108) des Stützelements (68) und der Teilblenden (102, 104) einerseits gleich groß und andererseits 1/n mal so groß wie die Umfangsbreite(n) des/der Durchgangsöffnung(en) (82) des Stützelements (68) sind, wobei n die Anzahl der Teilblenden (102, 104) ist.

8. Verdichter (22) gemäß einem der vorhergehenden Ansprüche, **gekennzeichnet durch** Anschlagelemente (116, 118) der Teilblenden (102, 104), die, ausgehend von der weitestmöglich geschlossenen und/oder ausgehend von der weitestmöglich geöffneten Stellung der Verschlussvorrichtung (84), eine Drehung der zweiten Teilblende (104) erst nach einem definierten Drehbewegungsabschnitt der ersten Teilblende (102) an eine Drehung der ersten Teilblende (102) koppeln.

9. Verdichter (22) gemäß einem der vorhergehenden Ansprüche, **gekennzeichnet durch** eine Leitvorrichtung zur Erzeugung eines Dralls für eine aus Richtung des Verdichtereinlasses (42) in den peripheren Strömungsbereich (56) eintretende Gasströmung.

10. Verdichter (22) gemäß Anspruch 9, **gekennzeichnet durch** eine Ausgestaltung der Leitvorrichtung derart, dass die Drehrichtung der Drallströmung zu der für das Verdichterlaufrad (30) vorgesehenen Drehrichtung entgegengesetzt ist.

11. Verdichter (22) gemäß Anspruch 9 oder 10, **dadurch gekennzeichnet, dass** wobei die Leitvorrichtung eine oder mehrere Leitflächen (100) ausbildet, die sich von einem eine Durchgangsöffnung (82) begrenzenden Rand eines/des Verschlussabschnitts (98) erstreckt/erstrecken.

12. Abgasturbolader mit einem Verdichter (22) gemäß einem der vorhergehenden Ansprüche und einer Turbine (26).

13. Brennkraftmaschine mit einem Verbrennungsmotor (10), einem Frischgasstrang, einem Abgasstrang, einer Abgasrückführung (70) und einem in den Frischgasstrang integrierten Verdichter (22) gemäß einem der Ansprüche 1 bis 11 oder einem Abgasturbolader gemäß Anspruch 12, wobei der Verdichter (22) in den Frischgasstrang integriert ist.

14. Brennkraftmaschine gemäß Anspruch 13, **gekennzeichnet durch** eine Steuerungsvorrichtung (14), die einen zur Verschiebung zumindest des Endabschnitts (62) des Strömungsleitelements (52) vorgesehenen Aktor derart ansteuert, dass
- bei einem Betrieb der Brennkraftmaschine in einem ersten Betriebszustand, der durch relativ niedrige Drehzahlen des Verbrennungsmotors (10) gekennzeichnet ist, die Verschlussstellung des Strömungsleitelements (52) eingestellt ist und
- bei einem Betrieb der Brennkraftmaschine in einem zweiten Betriebszustand, der durch relativ hohe Drehzahlen des Verbrennungsmotors (10) gekennzeichnet ist, die Öffnungsstellung des Strömungsleitelements (52) eingestellt ist.

15. Brennkraftmaschine gemäß Anspruch 14, **dadurch gekennzeichnet, dass** die Steuerungsvorrichtung (14) einen Aktor derart ansteuert, dass
- bei einem Betrieb der Brennkraftmaschine in dem ersten Betriebszustand und zusätzlich bei relativ hoher Last, der periphere Strömungsbereich (56) in dem stromauf der Mündung (72) der Abgasrückführung (70) gelegenen Abschnitt freigegeben ist und
- bei einem Betrieb der Brennkraftmaschine in dem ersten Betriebszustand und zusätzlich bei relativ niedriger Last, der periphere Strömungsbereich (56) in dem stromauf der Mündung (72) der Abgasrückführung (70) gelegenen Abschnitt verschlossen ist.

16. Brennkraftmaschine gemäß einem der Ansprüche 13 bis 15, **dadurch gekennzeichnet, dass** die Abgasrückführung (70) ein Regelventil (76) und/oder keine in dem Abgasstrang angeordnete Abgasklappe aufweist.

## Claims

1. A compressor (22) having a housing (36) which forms a flow space, within which a compressor impeller (30) is rotatably mounted, and an inlet channel (40) which connects a compressor inlet (42) to the flow space, wherein in the inlet channel (40), a tubular flow guide element (52) is arranged, by means of which the at least one section of the inlet channel (40) is divided into a central flow region (54) and a peripheral flow region (56) that both transition into the flow chamber in the region of an entrance plane (38) of the compressor impeller (30), wherein an exhaust gas recirculation system (70) opens into the peripheral flow region (56), and the peripheral flow region (56) is designed to be closable by means of a closing device (84) in a section located upstream from a mouth (72) of the exhaust gas recirculation system (70), wherein the flow guide element (52) has at least one overflow opening (66) in a section located centrally in the longitudinal axis, **characterized in that** at least one end section (62) of the flow guide element (52) that is adjacent to the compressor impeller (30) is designed to be displaceable along the longitudinal axis, wherein in the region of the inlet plane (38), the peripheral flow region (56) is closed in a closed position and is released in an open position by this end section (62), and the closing device (84) comprises a support element (68) which forms one or more passage openings (82) and one or more closing sections (98), and a closing diaphragm (86) which likewise has one or more passage openings (90) and one or more closing sections (106, 108), wherein the closing diaphragm (86) is rotatable relative to the support element (68) about an axis of rotation (92), and wherein the closing diaphragm (86) comprises at least two partial diaphragms (102, 104) which are arranged to be rotatable relative to one another about the axis of rotation (92) and to be axially sequential.

2. The compressor (22) according to claim 1, **characterized in that** the flow guide element (52) is divided by the overflow opening (66) into an initial section (60) and the end section (62), wherein the flow cross-section of the central flow region (54) decreases in the initial section (60) and/or in the end section (62) in the direction facing the compressor impeller (30).

3. The compressor (22) according to claim 2, **characterized in that** the smallest flow cross-section of the central flow region (54) within the initial section (60) is lesser than or equal to the smallest flow cross-section of the central flow region (54) within the end section (62).

4. The compressor (22) according to any of the preceding claims, **characterized by** a coupling between the flow guide element (52) and the closing device (84) such that a closing movement of the closing device (84) leads to a displacement of at least the end section (62) of the flow guide element (52).

5. The compressor (22) according to claim 4, **characterized in that** the closing movement of the closing device (84) is divided into a first section and a second section, wherein a movement within the first section only causes a change in the closed position of the closing device (84), while the closing movement in the second section causes only or additionally a displacement of at least the end section (62) of the flow guide element (52).

6. The compressor (22) according to any of the preceding claims, **characterized in that** the partial diaphragms (102, 104) each form one or more closing sections (106, 108), wherein the circumferential widths of the individual closing sections (106, 108) of the partial diaphragms (102, 104) are each smaller than the circumferential width(s) of the passage opening(s) (82) of the support element (68), and the sum of the circumferential widths of each closing section (106, 108) of the partial diaphragms (102, 104) is equal to or greater than the circumferential width(s) of the passage opening(s) (82) of the support element (68).

7. The compressor (22) according to claim 6, **characterized in that** the circumferential widths of the individual closing sections (98, 106, 108) of the support element (68) and the partial diaphragms (102, 104) are equally large on the one hand, and on the other hand are 1/n times as large as the circumferential width(s) of the passage opening(s) (82) of the support element (68), wherein n is the number of partial diaphragms (102, 104).

8. The compressor (22) according to any of the preceding claims, **characterized by** stop elements (116, 118) of the partial diaphragms (102, 104) which, starting from the most closed and/or starting from the most open position of the closing device (84), couple a rotation of the second partial diaphragm (104) only after a defined rotational movement section of the first partial diaphragm (102) to a rotation of the first partial diaphragm (102).

9. The compressor (22) according to any of the preceding claims, **characterized by** guide device for generating a swirl for a gas flow entering the peripheral flow region (56) from the direction of the compressor inlet (42).

10. The compressor (22) according to claim 9, **characterized by** an embodiment of the guide device such that the direction of rotation of the swirling flow is opposite the direction of rotation provided for the compressor impeller (30).

11. The compressor (22) according to claim 9 or claim 10, **characterized in that** the guide device forms one or more guiding surfaces (100) which extend from an edge of a/the closing section (98) bordering a passage opening (82).

12. An exhaust gas turbocharger having a compressor (22) according to any of the preceding claims and a turbine (26).

13. An internal combustion engine having a combustion engine (10), a fresh gas line, an exhaust gas line, an exhaust gas recirculation system (70), and a compressor (22) integrated into the fresh gas line according to any of claims 1 to 11 or an exhaust gas turbocharger according to claim 12, wherein the compressor (22) is integrated into the fresh gas line.

14. The internal combustion engine according to claim 13, **characterized by** a control device (14) which controls an actuator provided for displacing at least the end section (62) of the flow guide element (52) in such a way that:
- while the internal combustion engine is operating in a first operating state which is **characterized by** relatively low rotational speeds of the internal combustion engine (10), the closed position of the flow guide element (52) is set, and
- while the internal combustion engine is operating -in a second operating state which is **characterized by** relatively high rotational speeds of the internal combustion engine (10), the open position of the flow guide element (52) is set.

15. The internal combustion engine according to claim 14, **characterized in that** the control device (14) controls an actuator such that:
- while the internal combustion engine is operating in the first operating state and also under a relatively high load, the peripheral flow region (56) is released in the section located upstream from the mouth (72) of the exhaust gas recirculation system (70), and
- while the internal combustion engine is operating in the first operating state and also under a relatively low load, the peripheral flow region (56) is closed in the section located upstream from the mouth (72) of the exhaust gas recirculation system (70).

16. The internal combustion engine according to any of claims 13 to 15, **characterized in that** the exhaust gas recirculation (70) has a control valve (76) and/or no exhaust gas flap arranged in the exhaust gas line.

## Revendications

1. Compresseur (22) comprenant un carter (36), qui forme un espace d'écoulement, dans lequel une roue de compresseur (30) est montée rotative et un canal d'entrée (40), qui relie une entrée de compresseur (42) à l'espace d'écoulement, dans lequel, dans le canal d'entrée (40), est agencé un élément tubulaire de guidage de flux (52) qui divise au moins une partie du canal d'entrée (40) en une zone d'écoulement centrale (54) et une zone d'écoulement périphérique (56), qui aboutissent toutes deux dans l'espace d'écoulement dans la zone d'un plan d'entrée (38) de la roue de compresseur (30), dans lequel une recirculation des gaz d'échappement (70) débouche dans la zone d'écoulement périphérique (56) et la zone d'écoulement périphérique (56) est conçue pour pouvoir être fermée par un dispositif de fermeture (84) dans une partie située en amont d'un débouché (72) de la recirculation de gaz d'échappement (70), dans lequel l'élément de guidage de flux (52) présente au moins une ouverture de trop-plein (66) dans une partie située au centre par rapport à l'axe longitudinal, **caractérisé en ce qu'**au moins une partie d'extrémité (62) de l'élément de guidage de flux (52) adjacente à la roue de compresseur (30) est conçue pour être déplaçable par rapport à l'axe longitudinal, dans lequel la zone d'écoulement périphérique (56) dans la zone du plan d'entrée (38) est fermée dans une position de fermeture par cette partie d'extrémité (62) et est dégagée dans une position d'ouverture et **en ce que** le dispositif de fermeture (84) comprend un élément de protection (68), qui forme une ou plusieurs ouvertures de passage (82) et une ou plusieurs parties de fermeture (98), ainsi qu'un cache de fermeture (86), qui présente également une ou plusieurs ouvertures de passage (90) et une ou plusieurs parties de fermeture (106, 108), dans lequel le cache de fermeture (86) peut tourner par rapport à l'élément de protection (68) autour d'un axe de rotation (92) et dans lequel le cache de fermeture (86) comprend au moins deux caches partiels (102, 104) qui peuvent tourner l'un par rapport à l'autre autour de l'axe de rotation (92) et sont agencés axialement l'un derrière l'autre.

2. Compresseur (22) selon la revendication 1, **caractérisé en ce que** l'élément de guidage de flux (52) est divisé par l'ouverture de trop-plein (66) en une partie de début (60) et une partie de fin (62), dans lequel la section transversale d'écoulement de la zone d'écoulement centrale (54) se rétrécit dans la partie de début (60) et/ou dans la partie de fin (62) dans la direction orientée vers la roue de compresseur (30).

3. Compresseur (22) selon la revendication 2, **caractérisé en ce que** la plus petite section transversale d'écoulement de la zone d'écoulement centrale (54) au sein de la partie de début (60) est identique ou plus petite par rapport à la plus petite section transversale d'écoulement de la zone d'écoulement centrale (54) au sein de la partie de fin (62).

4. Compresseur (22) selon l'une quelconque des revendications précédentes, **caractérisé par** un accouplement entre l'élément de guidage de flux (52) et le dispositif de fermeture (84) de sorte qu'un mouvement de fermeture du dispositif de fermeture (84) entraîne un déplacement d'au moins la partie de fin (62) de l'élément de guidage de flux (52).

5. Compresseur (22) selon la revendication 4, **caractérisé en ce que** le mouvement de fermeture du dispositif de fermeture (84) est divisé en une première partie et une seconde partie, dans lequel un mouvement au sein de la première partie provoque exclusivement une modification de la position de fermeture du dispositif de fermeture (84), tandis que le mouvement de fermeture dans la seconde partie provoque exclusivement ou en complément un déplacement au moins de la partie de fin (62) de l'élément de guidage de flux (52).

6. Compresseur (22) selon l'une quelconque des revendications précédentes, **caractérisé en ce que** les caches partiels (102, 104) forment respectivement une ou plusieurs parties de fermeture (106, 108), dans lequel les largeurs de périmètre des parties de fermeture (106, 108) individuelles des caches partiels (102, 104) sont respectivement inférieures à la ou aux largeurs de périmètre de la ou des ouvertures de passage (82) de l'élément de protection (68) et la somme des largeurs de périmètre d'une partie de fermeture (106, 108) respective des caches partiels (102, 104) est égale ou supérieure à la ou aux largeurs de périmètre de la ou des ouvertures de passage (82) de l'élément de protection (68).

7. Compresseur (22) selon la revendication 6, **caractérisé en ce que** les largeurs de périmètre des sections de fermeture (98, 106, 108) individuelles de l'élément de protection (68) et des caches partiels (102, 104) sont d'une part identiques et d'autre part 1/n fois aussi grandes que la ou les largeurs de périmètre de la ou des ouvertures de passage (82) de l'élément de protection (68), dans lequel n est le nombre de caches partiels (102, 104).

8. Compresseur (22) selon l'une quelconque des revendications précédentes, **caractérisé par** des éléments de butée (116, 118) des caches partiels (102, 104), qui, à partir de la position fermée au maximum et/ou à partir de la position ouverte au maximum du dispositif de fermeture (84), lient une rotation du second cache partiel (104) d'abord après une partie de rotation définie du premier cache partiel (102) à une rotation du premier cache partiel (102).

9. Compresseur (22) selon l'une quelconque des revendications précédentes, **caractérisé par** un dispositif de guidage pour la production d'un tourbillon pour un écoulement de gaz entrant depuis la direction de l'entrée de compresseur (42) dans la zone d'écoulement périphérique (56).

10. Compresseur (22) selon la revendication 9, **caractérisé par** un agencement du dispositif de guidage de sortie que la direction de rotation de l'écoulement tourbillonnant soit opposée à la direction de rotation prévue pour la roue de compresseur (30).

11. Compresseur (22) selon la revendication 9 ou 10, **caractérisé en ce que** le dispositif de guidage forme une ou plusieurs surfaces de guidage (100) qui s'étend ou s'étendent depuis un bord limitant une ouverture de passage (82) d'une ou de la partie de fermeture (98).

12. Turbocompresseur à gaz d'échappement comprenant un compresseur (22) selon l'une quelconque des revendications précédentes et une turbine (26).

13. Moteur à combustion interne comprenant un moteur à combustion (10), une branche de gaz frais, une branche de gaz d'échappement, une recirculation de gaz d'échappement (70) et un compresseur (22) selon l'une quelconque des revendications 1 à 11 intégré dans la branche de gaz frais ou un turbocompresseur à gaz d'échappement selon la revendication 12, dans lequel le compresseur (22) est intégré dans la branche de gaz frais.

14. Moteur à combustion interne selon la revendication 13, **caractérisé par** un dispositif de commande (14), qui commande un actionneur prévu pour le déplacement d'au moins la partie de fin (62) de l'élément de guidage de flux (52) de sorte que
- lors d'un fonctionnement du moteur à combustion interne dans un premier état de fonctionnement, qui est **caractérisé par** un régime relativement faible du moteur à combustion (10), la position de fermeture de l'élément de guidage de flux (52) soit définie et
- lors d'un fonctionnement du moteur à combustion interne dans un second état de fonctionnement, qui est **caractérisé par** un régime relativement élevé du moteur à combustion (10), la position d'ouverture de l'élément de guidage de flux (52) soit définie.

15. Moteur à combustion interne selon la revendication 14, **caractérisé en ce que** le dispositif de commande (14) commande un actionneur de sorte que
- lors d'un fonctionnement du moteur à combustion interne dans le premier état de fonctionnement et en outre avec une charge relativement élevée, la zone d'écoulement périphérique (56) soit dégagée dans la partie située en amont du débouché (72) de la recirculation de gaz d'échappement (70) et
- lors d'un fonctionnement du moteur à combustion interne dans le premier état de fonctionnement et en outre avec une charge relativement faible, la zone d'écoulement périphérique (56) soit fermée dans la partie située en amont du débouché (72) de la recirculation de gaz d'échappement (70).

16. Moteur à combustion interne selon l'une quelconque des revendications 13 à 15, **caractérisé en ce que** la recirculation de gaz d'échappement (70) présente une soupape de commande (76) et/ou aucun clapet d'évacuation des gaz d'échappement agencé dans la branche de gaz d'échappement.
